# EUROPEAN PATENT APPLICATION

(11) **EP 2 014 698 A1**
(43) Date of publication of application: **14.01.2009**
(21) Application number: 07112386.3
(22) Date of filing: 12.07.2007
(51) Int. Cl.: C08G 73/02, C08G 79/02, C09K 11/06

(54) **Polymers and their use as fluorescent labels**

(71) Applicant: Crystax Pharmaceuticals S.L., 08028 Barcelona (ES)
(72) Inventor: Aymami Bofarull, Juan, 08790, Gelida (Barcelona) (ES); Albericio Palomera, Fernando, 08007, Barcelona (ES); Aviñó Andrés, Anna María, 08041, Barcelona (ES); Farrera Sinfreu, Josep, 25595, Tírvia (Lleida) (ES); Royo Expósito, Miriam, 08001, Barcelona (ES); Navarro Muñoz, Isabel, 08912, Badalona (Barcelona) (ES); Eritja Casadellà, Ramón, 08015, Barcelona (ES)
(74) Representative: Barlocci, Anna

(57) **Abstract**

The present invention relates to a polymer composed by monomers of formula (I) as well as to a process for its preparation and its use as fluorophore. 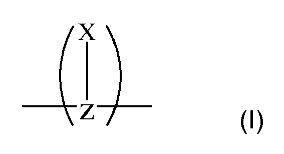 wherein:

X is a radical of formula (II) 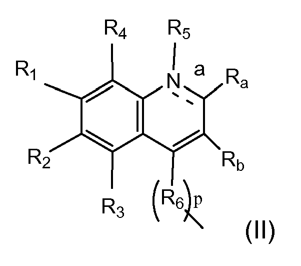 wherein
-R₅ is an electron pair or a (C₁-C₃)-alkyl radical;
-Rₐ and -R_{b} are radicals independently selected from the group consisting of H, (C₁-C₄)-alkyl, (C₁-C₄)-alkoxy, (C₁-C₄)-alkylamino, phenyl, F, Cl, Br, amino, hydroxy, and nitro or
-Rₐ and -R_{b} are fused forming with the carbon atoms to which they are attached a ring of formula (III) 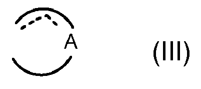 with the condition that
(i) when -R₅ is an electron pair, a is a N=C double bond, and Rₐ and R_{b} are fused forming the ring 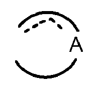 said ring being a biradical selected from (IIIa) and (IIIb) 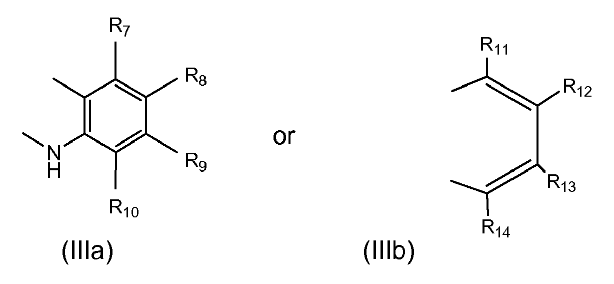 thus, radical (II) is (IIa) or (IIb) respectively 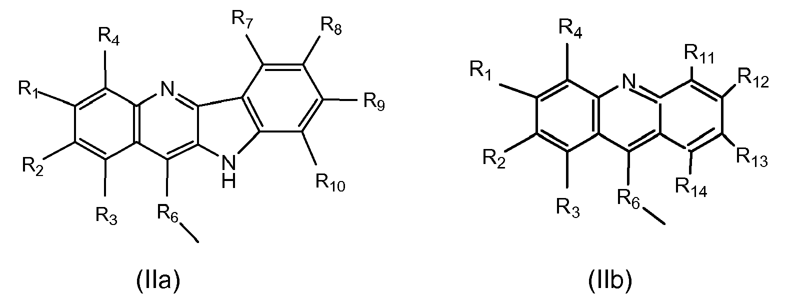 (ii) when -R₅ is a (C₁-C₃)-alkyl radical, a is a N-C single bond and Rₐ and R_{b} are fused forming the ring 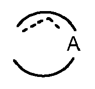 said ring being a biradical 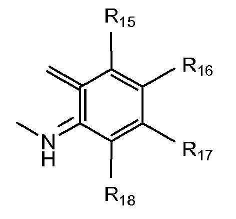 thus, the radical (II) is (IIc); 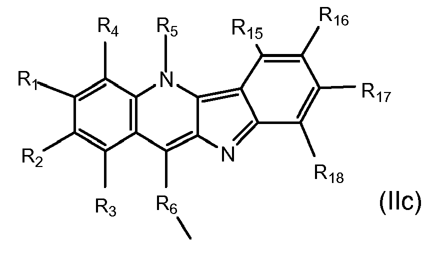 R₁-R₄ and R₇-R₁₈ represent radicals, same or different, selected from the group consisting of H, (C₁-C₄)-alkyl, (C₁-C₄)-alkoxy, (C₁-C₄)-alkylamino, phenyl, F, Cl, Br, amino, hydroxy, and nitro;
p is an integer from 0 to 1;
R₆ is a biradical selected from the group consisting of -CO-; -CONH(CH₂)ₘCO-; and -CO[NHCHR"CO]ₘ-, wherein -R" are side chains radicals, same or different, corresponding to natural aminoacids; and m is an integer from 1 to 3;
Z is a triradical of formula (IV) 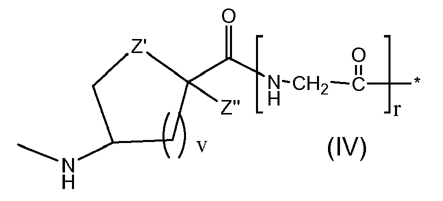 wherein
r is an integer from 0 to 1;
v is an integer from 0 to 1;
Z' is a triradical selected from -CH₂- and nitrogen;
Z" is H or a -NH- biradical,
with the previso that:
(a) when Z' is nitrogen, forming an amide bound with R₆, then Z" is hydrogen and v is an integer from 0 to 1, and
(b) when Z" is -NH-, forming an amide group with R₆, then Z' is -CH₂- and v=0,
or of formula (V): 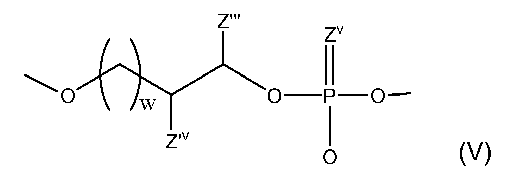 wherein
Z''' is selected from -CH₃ and -CH₂NH-,
Z^{iv} is selected from H and NH,
Z^{v} is selected from S and O atom,
W is an integer from 0 to 1,
with the previso that
(c) when R₆ is bound to Z''', then Z''' is -CH₂NH-, Z^{iv} is hydrogen and w is 0; and
(d) when Zᵢᵥ is -NH- forming an amide bound with R₆, Z''' is -CH₃- and w is 1; and
wherein the monomers of formula (I) are linked through the triradical Z, forming an amide or phosphate bound.

## Description

The present invention is related to the field of chemistry and molecular biology investigation. More particularly, the present invention refers to synthetic polymers which owing to their fluorescence properties are useful as labels of biological material.

### BACKGROUND ART

Fluorescence is the result of a three-stage process that occurs in certain molecules (generally polyaromatic hydrocarbons or heterocycles) named fluorophores or fluorescent dyes. In this process a photon supplied by an external source is absorbed by the fluorophore creating an excited electronic state. The excited state exists for a finite time while the fluorophore undergoes conformational changes, interacting with its molecular environment and dissipating energy yielding a relaxed excited state from which fluorescence emission originates. In the last step a photon is emitted returning the fluorophore to its ground state. Due to energy dissipation during the excited-state lifetime, the energy of this photon is lower and therefore of longer wavelength than the excitation photon.

Fluorescent based techniques are powerful tools for the investigation of biological material. The process of fluorescence emission occurs in a time scale between nanoseconds and milliseconds, dependent on the fluorescence system used. Since in this time scale many dynamic events take place, fluorescence can provide information on the structure, mobility, macromolecular size, distances or conformational rearrangements of dye-bound molecules.

In addition, fluorophores are becoming increasingly useful in combinatorial chemistry and biology, both as encoders of library members and as reporters of chemical reactions. Fluorescent nucleic acids in particular are important tools in molecular biology, diagnostics and structural studies. In order to make oligonucleotides fluorescent, a wide range of chemical and enzymatic methods were developed.

As a result of the greatly expanding use of fluorescent labels in research and diagnostic applications, there is a corresponding increase in the need for new fluorophores having a wider range of spectral characteristics along with improved properties.

### SUMMARY OF THE INVENTION

Inventors have found that the polymers according to the present invention have fluorescent properties. Particularly, when they are used as fluorophores they may be attached to molecules that are not fluorescent and the resulting molecule acquires the fluorescent properties of the fluorphore. It has been found, furthermore, that the attachment of the compounds of the present invention to the molecules to be tested is specific. This specific attachment confers high sensitivity and selectivity to the fluorescent based technique when the compounds of the invention are used as fluorophores or fluorescence labels. The main advantage of the improvement in sensitivity and selectivity is that a minor amount of the sample to be analyzed is needed, avoiding the inconveniences associated with the acquisition and processing of tissue samples.

It is kown in the state of the art that when fluorophores are used, they may exert an undesirable influence on the structure and mobility of the sample. These changes in the conformation of the sample can lead to a decreased specificity.

As it is illustrated below, the compounds of the present invention attachs to a target molecule (e.g., an oligonucleotide) being preserved the structure of the target. Furthermore, the inventors of the present invention have shown that the compounds when attach to the specific molecule increase the stability of said molecule (as it is derived from the melting temperature data).

Thus, a first aspect of the present invention is a polymer composed by monomers of formula (I) 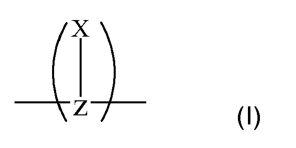 wherein:
X is a radical of formula (II) 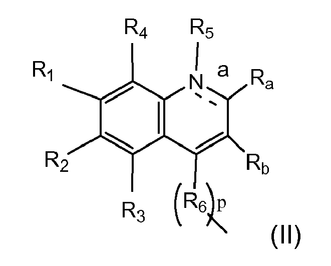
wherein
- R₅ is an electron pair or a (C₁-C₃)-alkyl radical;
- Rₐ and -R_{b} are radicals independently selected from the group consisting of H, (C₁-C₄)-alkyl, (C₁-C₄)-alkoxy, (C₁-C₄)-alkylamino, phenyl, F, CI, Br, amino, hydroxy, and nitro; or
- Rₐ and -R_{b} are fused forming with the carbon atoms to which they are attached a ring of formula (III) with the condition that 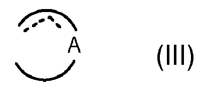
   (i) when -R₅ is an electron pair, a is a N=C double bond, and Rₐ and R_{b} are fused forming the ring 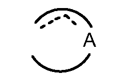 said ring being a biradical selected from (IIIa) and (IIIb) 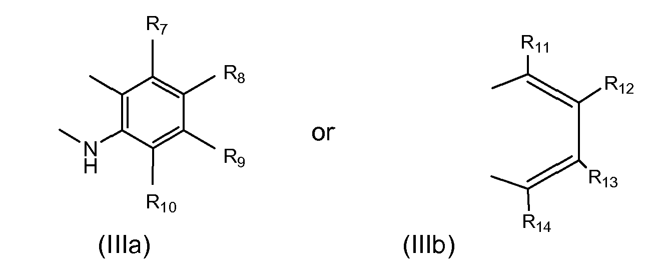 thus, radical (II) is (IIa) or (IIb) respectively 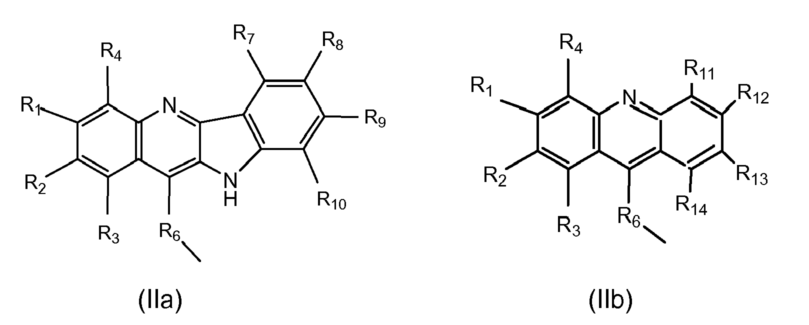
   (ii) when -R₅ is a (C₁-C₃)-alkyl radical, a is a N-C single bond and Rₐ and R_{b} are fused forming the ring 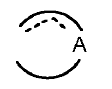 said ring being a biradical 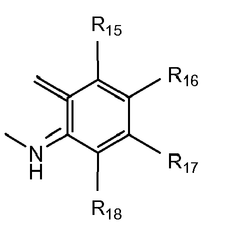 thus, the radical (II) is (IIc); 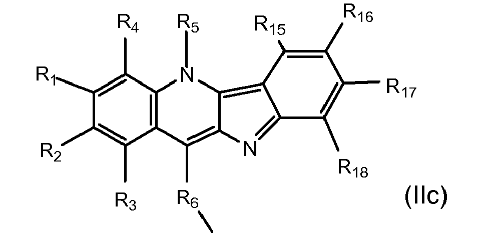 R₁-R₄ and R₇-R₁₈ represent radicals, same or different, selected from the group consisting of H, (C₁-C₄)-alkyl, (C₁-C₄)-alkoxy, (C₁-C₄)-alkylamino, phenyl, F, Cl, Br, amino, hydroxy, and nitro;
      p is an integer from 0 to 1;

R₆ is a biradical selected from the group consisting of -CO-;
-CONH(CH₂)ₘCO-; and -CO[NHCHR"CO]ₘ-, wherein -R" are side chains radicals, same or different, corresponding to natural aminoacids; and m is an integer from 1 to 3;
Z is a triradical of formula (IV) 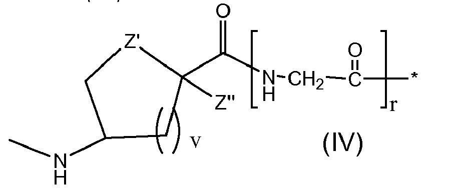 wherein
r is an integer from 0 to 1;
v is an integer from 0 to 1;
Z' is a triradical selected from -CH₂- and nitrogen;
Z" is H or a -NH- biradical,
with the proviso that:
(a) when Z' is nitrogen, forming an amide bound with R₆, then Z" is hydrogen and v is an integer from 0 to 1, and
(b) when Z" is -NH-, forming an amide group with R₆, then Z' is -CH₂- and v= 0,
or of formula (V): 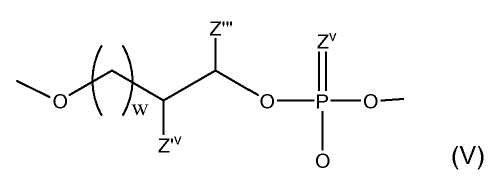 wherein
Z'" is selected from -CH₃ and -CH₂NH-,
Z^{iv} is selected from H and NH,
Z^{v} is selected from S and O atom,
W is an integer from 0 to 1,
with the proviso that
(c) when R₆ is bound to Z"', then Z"' is -CHNH-, Z^{iv} is hydrogen and w is 0; and
(d) when Z^{iv} is -NH- forming an amide bound with R₆, Z'" is - CH₃ and w is 1; and
and wherein the monomers of formula (I) are linked through the triradical Z, forming an amide or phosphate bound.

A second aspect of the present invention is a process for preparing a polymer according to the first aspect of the invention which is carried out coupling compounds of formula (VI): 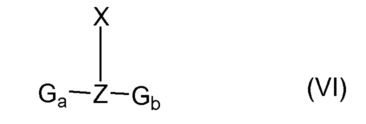 wherein
X and Z are as defined in above, and
Gₐ and G_{b} are protecting groups,
on a solid-phase support.

A third aspect of the present invention is compound of formula (VI): 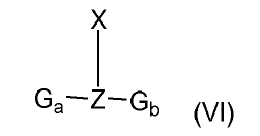 wherein X, Z, Gₐ and G_{b} are as defined above.

In a fourth aspect, the present invention relates to the use of a polymer according to the first aspect of the invention as a fluorophore.

Illustrative non-limitative examples of the applications of the polymers according to the first aspect of the invention as fluorophores are the following:
- automated sequencing of DNA by the chain termination method; each of four different chain terminating bases has its own specific fluorescent tag. As the labelled DNA molecules are separated, the fluorescent label is excited by a UV source, and the identity of the base terminating the molecule is identified by the wavelength of the emitted light.
- DNA detection for visualising the location of DNA fragments;
- The DNA microarray;
- Immunology: An antibody has a fluorescent chemical group attached, and the sites (e.g. on a microscopic specimen) where the antibody has bound can be seen, and even quantitated, by the fluorescence.
- FACS (fluorescent-activated cell sorting)
- The study of the structure and conformations of DNA and proteins. This is especially important in complexes of multiple biomolecules.

Fluorescence techniques using fluorescent labeled DNA probes have the potential for developing homogeneous, relatively inexpensive, and easy to use DNA probe assays, due to the sensitivity of the emission intensity of the fluorescent label to environmental changes. Such assays are possible if the hybridization of the probe with the target sequence is accompanied by a change in one or more fluorescent properties such as fluorescence quantum yield, lifetime, polarized emission, fluorescence quenching, excitation transfer or sensitized fluorescence. The target sequence can thus be detected and quantified from the change in properties occurring when the target sequence is added to an analysis tube containing the appropriate DNA probe.

Thus, in a fifth aspect the present invention provides a method of preparing a fluorescently labeled nucleic acid molecule which comprises incorporating at least one polymer according to the first aspect of the invention into a RNA or DNA molecule under conditions sufficient to incorporate said polymer.

In a sixth aspect, the present invention provides a method of detecting a target nucleic acid in a sample to be tested which comprises contacting the target nucleic acid with a nucleic acid probe comprising at least one polymer according to the first aspect of the invention, for a time under conditions sufficient to permit hybridization between said target and said probe; and detecting said hybridization.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and variations of the word, are not intended to exclude other technical features, additives, components, or steps. The disclosures in the abstract of this application is incorporated herein as reference. Additional objects, advantages and features of the invention will become apparent to those skilled in the art upon examination of the description or may be learned by practice of the invention. The following examples and drawings are provided by way of illustration, and they are not intended to be limiting of the present invention

### DETAILED DESCRIPTION OF PARTICULAR EMBODIMENTS

In one embodiment of the first aspect of the invention, the triradical Z group corresponds to the formula (IV). Preferably is selected from the group consisting of: 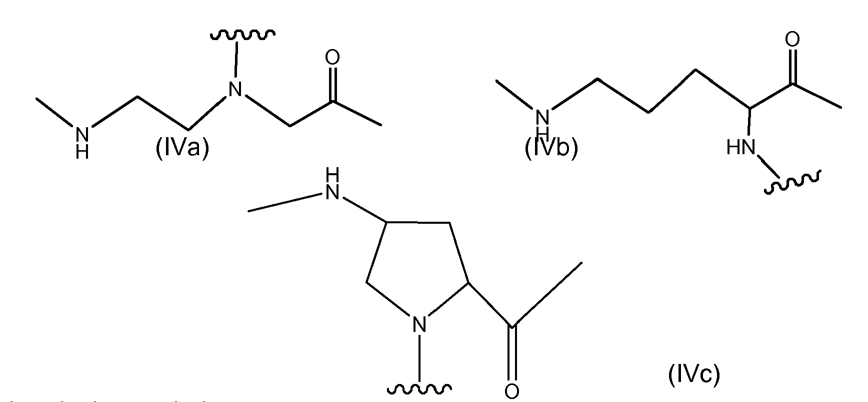 wherein the symbol 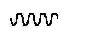 indicates the position through which radical X is attached by its biradical R₆.

In another embodiment of the first aspect of the invention, the triradical Z group corresponds to the formula (V). Preferably the triradical Z of formula (V) is selected from the group consisting of: 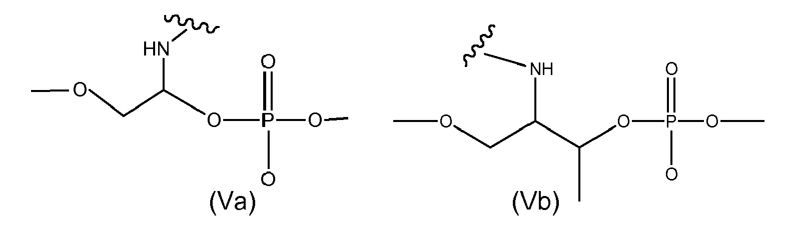 wherein the symbol 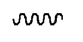 indicates the position through which triradical Z is attached to the radical X.

In another embodiment of the first aspect of the invention, the radical X of formula (II) is selected from the group consisting of: 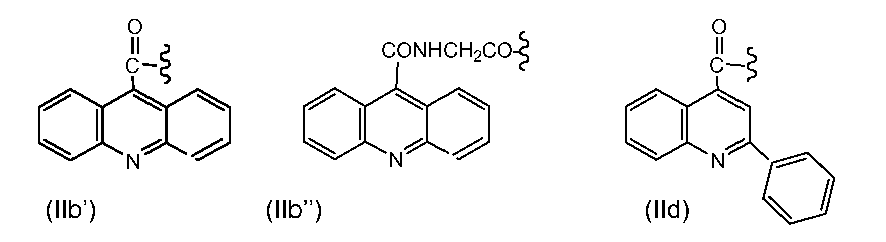 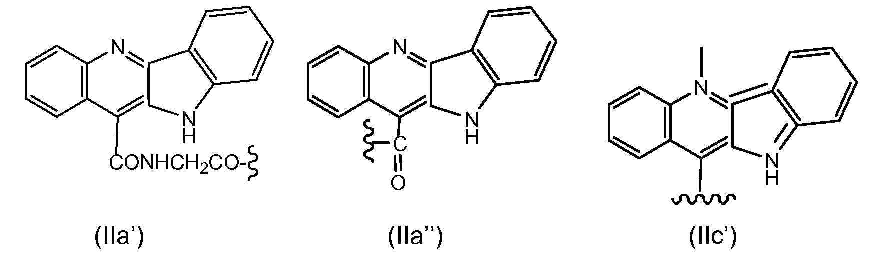 wherein the symbol 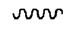 indicates the position through which radical X is attached by its radical R₆ to the triradical Z.

In still another embodiment, R₆ is -CO[NHCHR"CO]ₘ-, being -R" the side chain radical corresponding to the aminoacid selected from glicine and proline; and m is an integer from 1 to 3.

In still yet another embodiment of the first aspect of the invention, the polymer is composed from two to ten monomers of formula (I).

Preferably the polymer is a homopolymer.

In the present invention, the term "homopolymer" is to be understood as that which is constructed of identical monomers of formula (I) as defined above.

In another embodiment of the first aspect of the invention the polymer is a heteropolymer.

In the present invention, the term "heteropolymer" is to be understood as a polymer which is composed by different monomers of formula (I).

The polymer according to the present invention is selected from the group consisting of:
O-{2-N-(Acridine-9-carbamoyl)-(1-hydroxybut-3-yl)} and O-{2-N-(10H-indolo[3,2-d]quinoline-11-carbamoyl)-3-hydroxybut-1-yl} phosphate;
O-{2-N-(10H-indolo[3,2-d]quinoline-11-carbamoyl)-(1-hydroxybut-3-yl)} and O-(2-N-{10H-indolo[3,2-d]quinoline-11-carbamoyl}-3-hydroxybut-1-yl) phosphate;
O-{2-N-(Acridine-9-carbamoyl)-(1-hydroxybut-3-yl)}phosphate(3-1)O-{2-N-(10H-indolo[3,2-d]quinoline-11-carbamoyl)-3-oxybut-1-yl}phosphate(3-1) O-(2-N-{10H-indolo[3,2-d]quinoline-11-carbamoyl}-3-hydroxybut-1-yl);
O-{2-N-(Acridine-9-carbamoyl)-(1-hydroxybut-3-yl)}phosphate(3-1)O-{2-N-(acridine-9-carbamoyl)-(1-hydroxybut-3-yl)}phosphate(3-1)O-{2-N-(acridine-9-carbamoyl)-(1-hydroxybut-3-yl)}phosphate(3-1)O-{2-N-(acridine-9-carbamoyl)-(1-hydroxybut-3-yl)}phosphate(3-1)O-{2-N-(acridine-9-carbamoyl)-(1-hydroxybut-3-yl)}phosphate(3-1)O-{2-N-(acridine-9-carbamoyl)-3-hydroxybut-1-yl};
O-{2-N-(Acridine-9-carbamoyl)-(2-hydroxybut-3-yl)} and O-{3-(5-methyl-5*H-*indolo[3,2*b*]quinolin-11-ylamino-(S)-(2-hydroxyprop-3-yl} phosphate;
O-{2-N-(Acridine-9-carbamoyl)-(1-hydroxybut-3-yl)} and O-{3-(5-methyl-5*H-*indolo[3,2*b*]quinolin-11-ylamino-(S)-(2-hydroxyprop-3-yl}phosphorotioate;
O-[(R)-3-(Acridin-9-ylamino)-1-hydroxy-propane-2-yl]-phosphate(2-1)O-{2-N-(acridine-9-ylamino)-2-oxyprop-1-yl}phosphate(2-4)4-hydroxybutiramide;
O-{2-N-(2-phenylquinoline-4-carbamoyl-1-hydroxybutan-3-yl)} and O-{2-N-(acridine-9-carbamoyl)-3-hydroxybut-1-yl}phosphate;
O-{2-N-(2-phenylquinoline-4-carbamoyl-1-hydroxybutan-3-yl)} and O-{2-N-(2-phenylquinoline-4-carbamoyl-3-hydroxybutan-1-yl)}phosphate;
O-{2-N-(acridine-9-carbamoyl)-1-hydroxybut-3-yl} and O-{2-N-(2-phenylquinoline-4-carbamoyl-3-hydroxybutan-1-yl)}phosphate; O-{2-N-(2-phenylquinoline-4-carbamoyl-1-hydroxybutan-3-yl)} and O-(2-N-{10H-indolo[3,2-d]quinoline-11-carbamoyl}-3-hydroxybut-1-yl);
O-{2-N-(Acridine-9-carbamoyl)-(1-hydroxybut-3-yl)} phosphate(3-1)O-{2-N-(10H-indolo[3,2-d]quinoline-11-carbamoyl)-3-oxybut-1-yl)phosphate(3-1)O-{2-N-(acridine-9-carboxamido)acetamido]-(3-hydroxybut-1-yl)};
(2S, 3R)-2-((9H-Fluoren-9-yl)methyloxycarbonyl)amino)butane-1-(4,4'-dimethoxytrityloxy)butan-3-ol;
(2S, 3R)-2-((9H-Fluoren-9-yl)methyloxycarbonyl)amino)butane-1-(4,4'-dimethoxytrityloxy)butan-3-yl N,N-diisopropylamino-2-cyanoethyl phosphoramidite;
O-{2-N-(10H-indolo[3,2-d]quinoline-11-carbamoyl)-3-oxybut-1-yl}phosphate (3-1) O-{3-(5-methyl-5*H*-indolo[3,2-*b*]quinolin-11-ylamino-(S)-(2hydroxylprop-3-yl);
O-{2-N-(10H-indolo[3,2-d]quinoline-11-carbamoyl)-3-oxybut-1-yl} phosphate (3-1) O-{2-N-(10H-indolo[3,2-*d*]quinoline-11-carbamoyl)-3-oxybut-1-yl} phosphate (3-1) O-(2-N-{10H-indolo[3,2-*d*]quinoline-11-carbamoyl}-3-hydroxybut-1-yl);
O-{2-N-(Acridine-9-carbamoyl)-(1-hydroxybut-3-yl)} phosphate (3-1) O-{2-N-(acridine-9-carbamoyl)-(1-hydroxybut-3-yl)}phosphate (3-1) O-{2-N-(acridine-9-carbamoyl)-(3-hydroxybut-1-yl)};
O-{2-N-(Acridine-9-carbamoyl)-(1-hydroxybut-3-yl)}phosphate (3-1) O-{2-N-(10H-indolo[3,2-d]quinoline-11-carbamoyl)-3-oxybut-1-yl}phosphate (3-1) O-{2-N-(acridine-9-carbamoyl)-(3-hydroxybut-1-yl)};
O-{2-N-(Acridine-9-carbamoyl)-(1-hydroxybut-3-yl)} phosphate (3-1) O-{2-N-(10*H*-indolo[3,2-*d*]quinoline-11-carbamoyl)-3-oxybut-1-yl} phosphate (3-1) O-{2-N-(5*H*-indolo[2,3-*b*]quinolin-5-yl)acetamido-3-hydroxybut-1-yl);
Acetyl-{2-[Acridine-9-carbonyl)-amino]-acetyl}-(2-aminoethyl)-glycyl-{2-[Acridine-9-carbonyl)-amino]-acetyl}-(2-aminoethyl)- N-6-hydroxyhexyl glycynamide;
Acetyl-{2-[Acridine-9-carbonyl)-amino]-acetyl}-(2-aminoethyl)-glycyl--{2-[Acridine-9-carbonyl)-amino]-acetyl}-(2-aminoethyl)-glycyl {2-[Acridine-9-carbonyl)-amino]-acetyl}-(2-aminoethyl)- N-6-hydroxyhexyl glycynamide;
Acetyl-{2-N-(10*H*-indolo[3,2-*d*]quinoline-11-carbonyl)-amino]-acetyl}-(2-aminoethyl)-glycyl-{2-N-(10*H*-indolo[3,2-*d*]quinoline-11-carbonyl)-amino]-acetyl}-(2-aminoethyl)- N-6-hydroxyhexyl glycynamide;
N-[2-(Acridine-9-carboxamide)]-4-N-[2-(acridine-9-carboxamide) prolinamide;
N-[2-(Acridine-9-carboxamide)acetyl]-4-N-acetamidoprolinamide;
N-{2-(10H-indolo[3,2-b]quinoline-11-carboxamide)acetyl}-4-N-acetamidoprolinamide;
N⁴-Acetyl-4-amino-{2-(acridine-9-carboxamide)acetyl}prolinyl-4-amino-{2-(acridine-9-carboxamide)acetyl}prolinamide;
N⁴-Acetyl-4-amino-{2-(10H-indolo[3,2-b]quinoline-11-carboxamide)acetyl}prolinyl-4-amino-{2-(10H-indolo[3,2-b]quinoline-11-carboxamide)acetyl}prolinamide;
10H-Indolo[3,2-b]quinoline-11-carboxylic acid {2-[4-acetylamino-2-(1-{2-[(acridine-9-carbonyl)-amino]-acetyl}-5-carbamoyl-pyrrolidin-3-ylcarbamoyl)-pyrrolidin-1-yl]-2-oxo-ethyl}-amide;
10H-indolo[3,2-b]quinoline-11-carboxylicacid (2-{4-[(4-acetylamino-1-{2-[(acridine-9-carbonyl)-amino]-acetyl}-pyrrolidine-2-carbonyl)-amino]-2-carbamoyl-pyrrolidin-1-yl}-2-oxo-ethyl)-amide;
N⁴-Acetyl-4-amino-{2-(acridine-9-carboxamide)acetyl}prolinyl-4-amino-{2-(acridine-9-carboxamide)acetyl}prolinyl-4-amino-{2-(acridine-9-carboxamide)acetyl}prolinamide;
N⁴-Acetyl-4-amino-{2-(10H-indolo[3,2-b]quinoline-11-carboxamide)acetyl}prolinyl-4-amino-{2-(10H-indolo[3,2-b]quinoline-11-carboxamide)acetyl}prolinyl-{2-(10H-indolo[3,2-b]quinoline-11-carboxamide)acetyl}prolinamide;
N⁴-Acetyl-4-amino-{2-(acridine-9-carboxamide)acetyl}prolinyl-4-amino-{2-(10H-indolo[3,2-b]quinoline-11-carboxamide)acetyl}proliny-4-amino-{2-(acridine-9-carboxamide)acetyl}prolinamide;
N⁴-Acetyl-4-amino-{2-(10H-indolo[3,2-b]quinoline-11-carboxamide)acetyl}prolinyl-4-amino-{2-(10H-indolo[3,2-b]quinoline-11-carboxamide)acetyl}prolinyl-4-amino-{2-(acridine-9-carboxamide)acetyl}prolinamide;
N⁴-Acetyl-4-amino-{2-(10H-indolo[3,2-b]quinoline-11-carboxamide)acetyl}prolinyl-4-amino-{2-(acridine-9-carboxamide)acetyl}prolinyl-4-amino-{2-(acridine-9-carboxamide)acetyl}prolinamide;
N⁴-Acetyl-4-amino-{2-(10H-indolo[3,2-b]quinoline-11-carboxamide)acetyl}prolinyl-4-amino-{2-(acridine-9-carboxamide)acetyl}prolinyl-4-amino-{2-(10H-indolo[3,2-b]quinoline-11-carboxamide)acetyl}prolinamide;
N⁴-Acetyl-4-amino-{2-(acridine-9-carboxamide)acetyl}prolinyl-4-amino-{2-(acridine-9-carboxamide)acetyl}prolinyl-4-amino-{2-(10H-indolo[3,2-b]quinoline-11-carboxamide)acetyl}prolinamide;
N⁴-Acetyl-4-amino-{2-(acridine-9-carboxamide)acetyl}prolinyl-4-amino-{2-(10H-indolo[3,2-b]quinoline-11-carboxamide)acetyl}proliny-4-amino-{2-(10H-indolo[3,2-b]quinoline-11-carboxamide)acetyl}prolinamide;
N⁴-Acetyl-4-amino-{2-(10H-indolo[3,2-b]quinoline-11-carboxamide)acetyl}prolinyl-4-aminoprolinyl-4-amino-{2-(acridine-9-carboxamide)acetyl}prolinyl-4-aminoprolinyl-4-amino-[(2-phenyl-quinoline-4-carboxamide)acetyl]prolinamide;
N⁴-Acetyl-4-amino-{2-(acridine-9-carboxamide)acetyl}prolinyl-4-aminoprolinyl-4-amino-[(2-phenyl-quinoline-4-carboxamide)acetyl]prolinamide-4-aminoprolinyl-4-amino-{2-(10H-indolo[3,2-b]quinoline-11-carboxamide)acetyl}prolinamide;
N⁴-Acetyl-4-amino-{2-(10H-indolo[3,2-b]quinoline-11-carboxamide)acetyl}prolinyl-4-aminoprolinyl-4-aminoprolinyl-4-amino-{2-(acridine-9-carboxamide)acetyl}prolinyl-4-aminoprolinyl-4-aminoprolinyl-4-amino-[(2-phenyl-quinoline-4-carboxamide)acetyl]prolinamide;
N⁴-Acetyl-4-amino-{2-(acridine-9-carboxamide)acetyl}prolinyl-4-aminoprolinyl-4-aminoprolinyl-4-amino-[(2-phenyl-quinoline-4-carboxamide)acetyl]prolinamide-4-aminoprolinyl-4-aminoprolinyl-4-amino-{2-(10H-indolo[3,2-b]quinoline-11-carboxamide)acetyl}prolinamide;
N⁴-Acetyl-5-N-{2-(acridine-9-carboxamide)acetyl}ornithinyl-5-N-{2-(acridine-9-carboxamide)acetyl}ornithinyl-5-N-{2-(acridine-9-carboxamide)acetyl}ornithinamide;
N⁴-Acetyl-5-N-{2-(acridine-9-carboxamide)acetyl}ornithinyl-5-N-{2-(10H-indolo[3,2-b]quinoline-11-carboxamide)acetyl}ornithinyl-5-N-{2-(acridine-9-carboxamide)acetyl}ornithinamide;
N⁴-Acetyl-5-N-{2-(acridine-9-carboxamide)acetyl}ornithinyl-5-N-{2-(10H-indolo[3,2-b]quinoline-11-carboxamide)acetyl}ornithinyl-5-N-{2-(10H-indolo[3,2-b]quinoline-11-carboxamide)acetyl}ornithinamide; and
N⁴-Acetyl-5-N-{2-(10H-indolo[3,2-b]quinoline-11-carboxamide)acetyl}ornithinyl-5-N-{2-(10H-indolo[3,2-b]quinoline-11-carboxamide)acetyl}ornithinyl-5-N-{2-(10H-indolo[3,2-b]quinoline-11-carboxamide)acetyl}ornithinamide.

"Protecting group" as used in the present invention is a group that is attached to, or placed on, an atom so the protected atom does not react with reactants, thereby temporarily rendering the protected atom inactive. Illustrative examples of protecting groups are tetrahydropyran (THP), t-butyloxy carbonyl (BOC) and fluoromethyloxy carbonyl (FMOC). A comprehensive list and description of protecting groups can be found in Protective groups in Organic Synthesis, second edition, T. W. Greene and P.G.M. Wuts, 1991, which are incorporated herein by reference.

In one embodiment of the second aspect of the invention, Gₐ and G_{b} are selected from dimethoxytrityl, -P(OCH₂CH₂CN)-N(isopropyl)₂ and t-butoxy carbonyl protecting groups.

In one embodiment of the third aspect of the invention, the compound is linked to a solid support through one of the protecting groups Gₐ and G_{b}.

### EXAMPLES

### I. Synthesis of the compounds of formula (VI).

A group of preferred compounds of formula (VI) are those derived from threoninol and which corresponds to formula (VIa).

Threoninol derivatives (VIa), wherein R₁-R₅, Rₐ, R_{b} and m are as defined above, can be prepared according to the process summarized in Scheme 1. 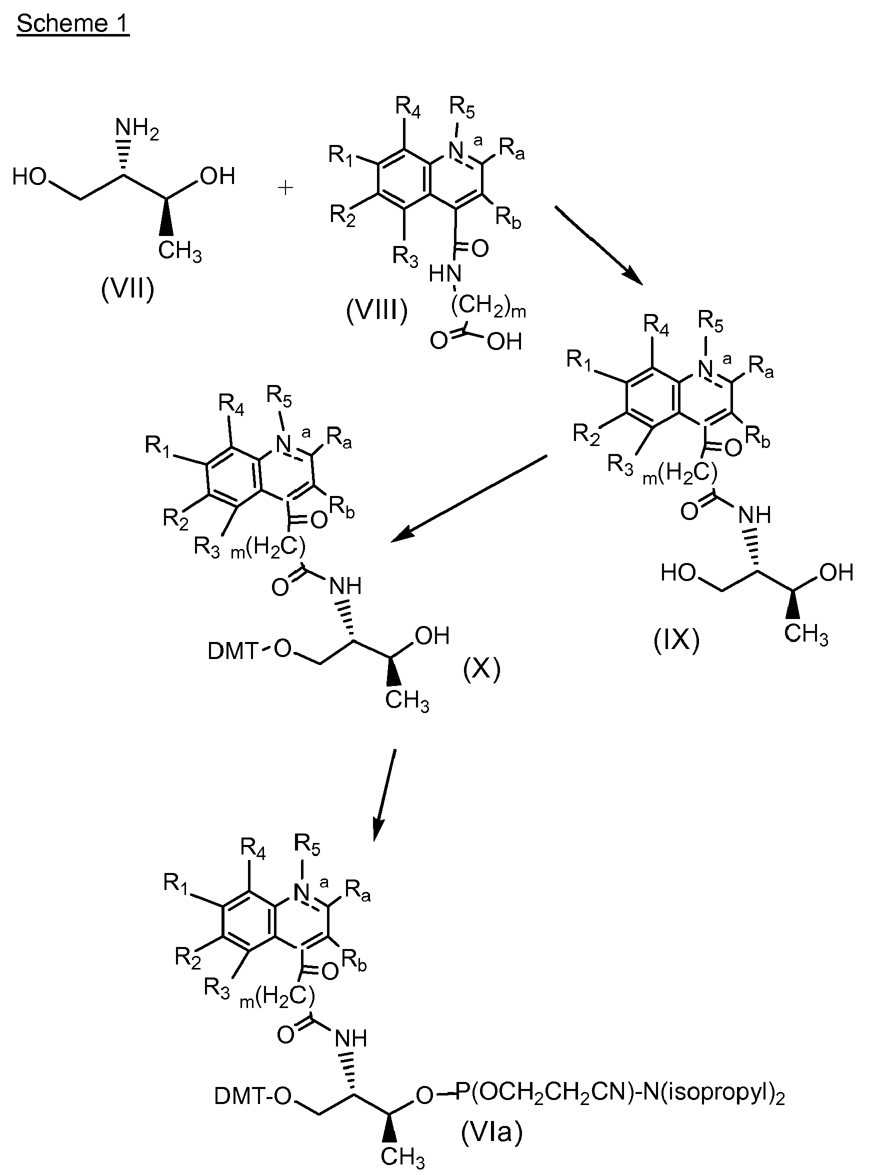 L-Threoninol (VII) was reacted with carboxylic derivatives (VIII) using diisopropylcarbodiimide and 1-hydroxybenzotriazole yielding compounds of formula (IX). In order to increase the distance between the compound of formula (VIII) and the threoninol molecule (VII) for those cases in which m is different from 0, a glycine is added by reaction of the carboxyl derivative of the compound with glycine methyl ester and subsequent hydrolysis of the methyl ester to yield derivatives VI. The compounds (IX) are reacted with dimethoxytrityl chloride in pyridine to yield 4,4'-dimethoxytrityl (DMT) derivatives (X) that were reacted with chloro-N,N-diisopropylamino-O-2-cyanoethoxy phosphine to yield phosphoramidites of formula (VIa).

Another group pf preferred compounds are those derived from 3-amino-1,2-propandiol and which corresponds to formula (VIb).

The synthesis of the 3-amino-1,2-propandiol derivatives of formula (VIb) is summarized in Scheme 2:

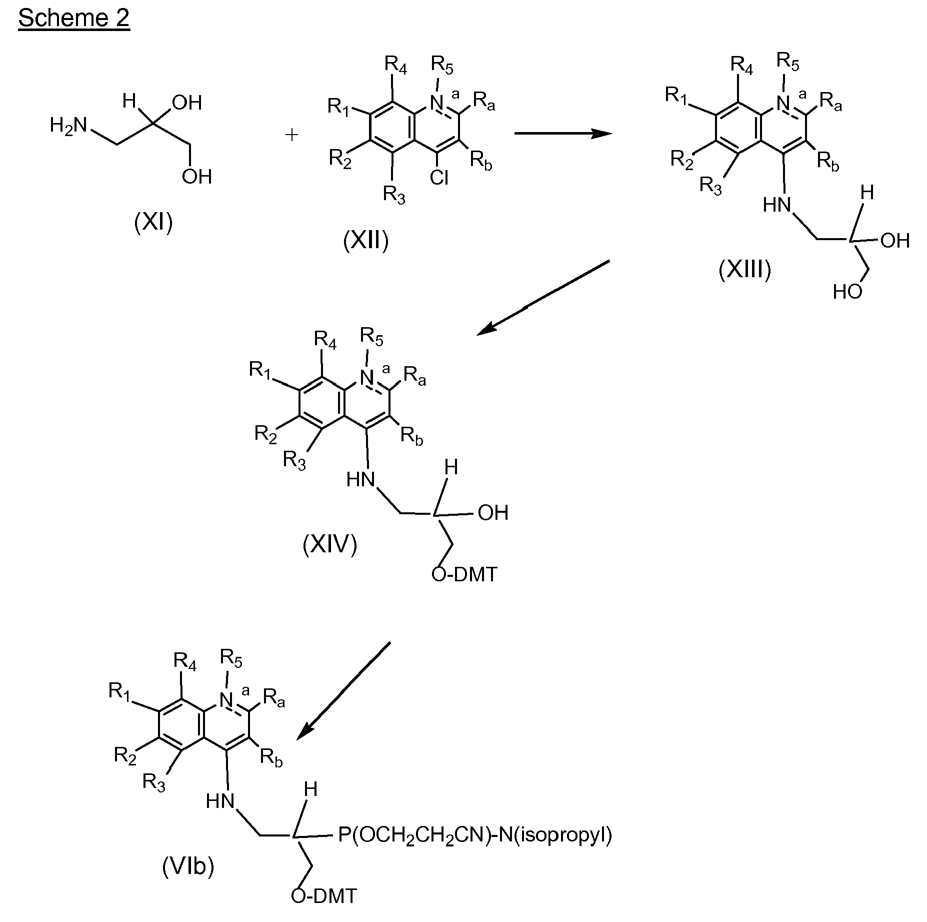

The R-isomer or the S-isomer of 3-amino-1,2-propandiol (XI) were reacted with the chloro derivative of formula (XII) yielding the corresponding diol derivatives (XIII). The resulting compounds were reacted with dimethoxytrityl chloride in pyridine to yield DMT derivatives (XIV) followed by reaction with chloro-N,N-diisopropylamino-O-2-cyanoethoxy phosphine to yield phosphoramidites (VIb).

Another group of preferred compounds are those derived from 2-aminoethylglycine derivatives which corresponds to formula (VIc).

The synthesis of 2-aminoethylglycine derivatives of of formula (VIc) is summarized in scheme 3.

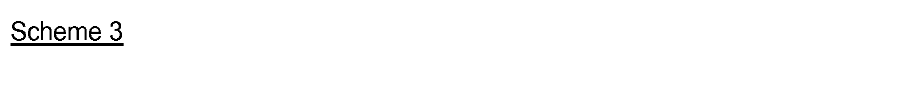

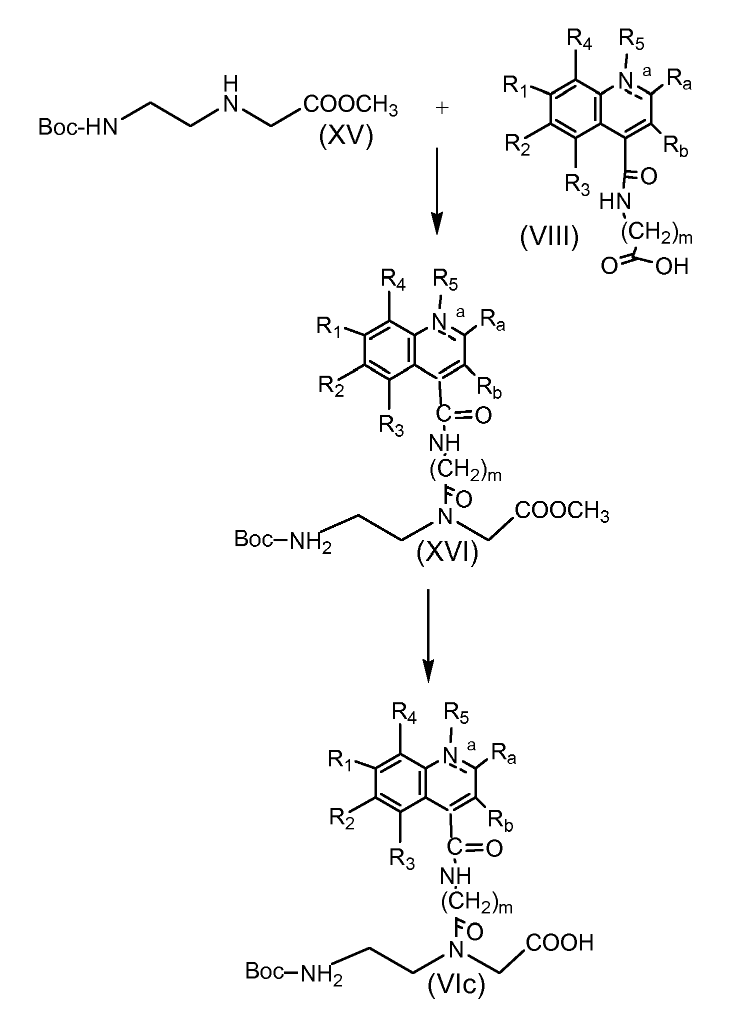

The N-Boc-protected derivative of 2-aminoethylglycine methyl ester (XV) is reacted with carboxyl derivative (VIII) using diisopropylcarbodiimide and 1-hydroxybenzotriazole yielding compound (XVI). Hydrolysis of the resulting compound with aq. NaOH in dioxane (1:1) gave the desired derivative (VIc) in good yields.

### II. Synthesis of polymers

In order to synthesize polymers using solid-phase protocols, DMT derivatives of DNA-intercalators described above were coupled to controlled pore glass supports using the succinyl linker as described in the bibliography. For this purpose DMT-derivatives described above were reacted with succinic anhydride followed by coupling of the resulting hemisuccinates with amino functionalized controlled pore glass yielding glass beads loaded with the appropriate intercalating compounds (c.f. R.T. Pon "Solid-phase supports for oligonucleotide synthesis" in Methods in Molecular Biology Vol.20: Protocols for oligonucleotides and analogs, Edited by S. Agrawal, Humana Press Inc., Totowa, NJ, USA (1993), pp 465-496).

Phosphoramidites described above were assembled into dimeric and trimeric strands using the appropriate solid supports (1-4 µmol scale). Standard phosphoramidite chemistry was used (c.f M.H. Caruthers et al., "Chemical synthesis of deoxyoligonucleotides by the phosphoramidite method" Methods Enzymol., 1987, vol. 154, pp287-313). This consist in cycles with four chemical reactions: 1) removal of the dimethoxytrityl group with 3% trichloroacetic acid in dichloromethane ; 2) phosphoramidite coupling using 4-5 times excess of phosphoramidite and 20 times excess of tetrazole; 3) capping with acetic anhydride and N-methylimidazole and 4) phosphite oxidation to phosphate with 0.01 M iodine in tetrhydrofurane/pyridine/water. Coupling yields were between 80-95%.

After the assembly of the sequences, supports were treated with conc. aqueous ammonia for 1-16 hrs at 20-60 °C to yield the desired unprotected oligomers. Excellent yields where obtained when oligomers contain L-threoninol backbone.

Some polymers with the propan-1,2-diol backbone were not stable to hot ammonia solutions. Alternatively these compounds were deprotected either with 1) a 0.5 M 1,8-diazabicyclo[5.4.0]undec-7-ene (DBU) solution in pyridine, and b) NH₃ in methanol at room temperature for 2-4 hr, but yields were very low. Best results were obtained using a new strategy based on an acid labile linker. In this strategy 4-trityl-4-hydroxybutanoic acid was reacted with polystyrene loaded with Rink-amide linker (c.f. H. Rink, "Solid-phase synthesis of protected peptide fragments using a trialkoxy-diphenyl-methylester resin" Tetrahedron Lett., 1987, vol 28, pp3787). The resulting support was used for the assembly of the s as described above. After the assembly of the sequences, the supports were treated with 0.5 M DBU solution for 1 min, washed with acetonitrile and treated with a solution contaning 95% trifluoroacetic acid and 5% water for 4 hr at room temperature. Using this conditions oligomers with the propan-1,2-diol backbone were obtained in good yields.

Polymers with N-aminoethylglycine backbone were synthesized on polyethyleneglycol-polystyrene supports with the 6-aminohexylsuccinyl linker (c.f. D.W. Will et al., "The synthesis of polyamide nucleic acids using a monomethoxytrityl protecting-group strategy" Tetrahedron, 1995, vol. 51, pp 12069-12082). Standard solid-phase peptide synthesis protocols were used. The synthesis cycle consist of two reactions: 1) Deprotection of Boc with a 5% cresol solution in 95% trifluoroacetic acid and 2) coupling of the appropriate monomer (5 molar excess) HATU (4.5 molar excess) and N,N-diisopropylethylamine (15 molar excess). After the assembly of the sequence, the resulting supports were treated with conc. aqueous ammonia for 2 hrs at 55°C to yield the desired unprotected oligomers.

In another protocol, a phosphoramidite derivative of threoninol was prepared. In this derivative, the amino group was protected with the Fmoc group and the primary alcohol function with the DMT group. The phosphoramidite group was incorporated in the secondary alcohol. This phosphoramidite was incorporated into a sequence using standard oligonucleotide synthesis protocols (example 60, 1-Qut-p-Cra-2). Removal of the Fmoc group with a 20% piperidine solution yields a free amino group that may be further derivatized with a drug carrying a carboxylic acid function. This protocol is known as submonomeric approach and it has been also used for the synthesis of PNA derivatives.

Polymers with the 4-aminoproline were assembled to the MBHA resin applying an Fmoc/Boc hybrid strategy and using *trans*-γ-Fmoc-amino-α-Boc-L-proline [Boc-Amp(Fmoc)-OH] as a amino acid (c.f. J. Farrera-Sinfreu et al., "A new class of foldamers based on cis-γ-amino-L-proline" JACS, 2004, 126, 6048-6057). Fmoc was the temporary protecting group for the γ-amino functionality of each monomer (for the backbone elongation thus). Boc was the semi-permanent protecting group for the α-amino group through which the fluorophores were introduced. α Amino derivatizations were carried out on solid-phase using standard Boc chemistry protocols. At this α-amino position, the addition of a glycine molecule as spacer allowed the intercalator introduction. In general, Fmoc group was removed using 20% of piperidine in DMF and Boc-Amp(Fmoc)-OH (5 eq) was coupled to the resin using DIPCDI (5 eq) and HOBt (5eq) as coupling reagents. Boc groups were removed using 40% TFA in DCM, followed by the resin treatment with 5% DIEA in DCM. Boc-Gly-OH (5eq) was coupled to the resin using DIPCDI (5 eq) and HOBt (5eq) as coupling reagents. Intercalators (3 eq) were coupled to the resin using TBTU (3 eq) and DIEA (6 eq) as coupling reagents. Acetylations were carried out using Ac₂O (5 eq) and DIEA (5 eq).

Thus, the synthesis of these polymers were carried out following different solid-phase procedures depending on the nature of the final oligomers (homopolymers or heteropolymers).

Protocol I. This protocol was applied for those polymers wherein the monomers were the same and introduced at the α-positions (homopolymers). Thus, the γ-peptidic backbone was synthesized first by repetitive couplings of Boc-Amp(Fmoc)-OH using Fmoc chemistry and, after removal of all Boc protecting groups, the spacer (Boc-Gly-OH) was introduced at the α-amino positions. After the Boc groups removal, fluorophores were introduced through these glycines, forming the final homopolymers. In this way, different dimers, trimers and tetramers were synthesised.

Protocol II. This protocol was applied for those polymers that have different monomers at each α-amino position of the different prolines (heteropolymers). In this procedure, the monomer was introduced in a sequential way after each aminoproline coupling. Thus, Boc-Amp(Fmoc)-OH was coupled to the MBHA resin, the Boc group was removed and the spacer (Boc-Gly-OH) was coupled, the Boc group was removed and the monomer was introduced, obtaining the first aminoproline functionalised with the first fluorophore. Then, the Fmoc group was removed, the second aminoproline monomer was introduced, the Boc group was removed, the spacer (Boc-Gly-OH) was coupled at this α-amino position, the Boc group was removed and the second fluorophore introduced, obtaining an aminoproline dimer with two different monomers. Repetitions of these steps allowed the synthesis of several dimers, trimers and tetramers.

Protocol III. This protocol was applied for those polymers that did not have monomer at all the α-amino proline positions. These compounds were treated as heteropolymers. They were synthesised using protocol II, with the difference that those α-amino positions of the proline that did not have monomer were acetylated. Thus, the α-amino positions that were maintained without monomer were acetylated after the Boc group removal.
All γ-aminoproline oligomers were finally treated with 20% piperidine solution to remove the N-terminal Fmoc group, acetylated at this position and treated with anhydrous HF to obtain the desired products.

Ornitine polymers were synthesised following the same synthetic strategies used in the synthesis of γ-aminoproline oligomers, just replacing the scaffold. Backbone elongation was carried out through the δ-amino function using Fmoc chemistry and monomers were introduced in the α-amino group using Boc chemistry and using glycine as a spacer.

### EXAMPLES

### Example 1: Preparation of 2-(10H-indolo[3,2-b]quinoline-11carboxamide)acetic acid (Compound 1c).

10H-indolo[3,2-d]quinoline-11-carboxylic acid (Compound **1a**) previously prepared (c.f. D.E. Bierer et al., "Ethnobotanical-directed discovery of the antihyperglycemic properties of cryptolepine: its isolation from Cryptolepis sanguinolenta, synthesis and in vitro and in vivo activities" J. Med. Chem. 1998, vol. 41, pp894-901) (0.43 g, 1.64 mmol) was dissolved in 20 ml of dimethylformamide together with N,N-diisopropylcarbodiimide (0.25 ml, 1.64 mmol) and 1-hydroxybenzotriazole (0.22 g, 1.64 mmol). The mixture was stirred for 15 minutes. To this solution a mixture of glycine methyl ester hydrochloride (0.15 mg, 1.64 mmol) and N,N-diisopropylethylamine (0.28 ml, 1.64 mmol) dissolved in dimethylformamide was added. After 2 hrs of magnetic stirring at room temperature N,N-diisopropylethylamine (0.2 ml, 1.12 mmol) were added and stirring was continued for 1 hour. The resulting mixture was concentrated to dryness and the residue was dissolved in CH₂Cl₂. A precipitate was formed that was collected yielding 2-(10H-indolo[3,2-b]quinoline-11-carboxamide)acetic methyl ester (0.31, 57%). The organic phase was washed with 5% sodium carbonate, saturated. NaCl, 0.1M sodium phosphate and saturated. NaCl aqueous solutions and dried (Na₂SO₄). Removal of the solvent and purification by chromatography on silica gel (0-4% methanol gradient over CH₂Cl₂) yielded 2-(10H-indolo[3,2-b]quinoline-11-carboxamide)acetic methyl ester (0.1, 18%). as a foam. Both fractions were combined yielding 0.4 g (75% yield). HPLC (conditions: HPLC solutions were solvent A: 5% acetonitrile in 100 mM triethylammonium acetate, pH 6.5 and solvent B: 70 % acetonitrile in 100 mM triethylammonium acetate (pH 6.5). Column: PRP-1 (Hamilton) 250x 10 mm. Flow rate 3 ml/min linear gradient from 15 to 80 in B ) single peak of retention time 18.8 min. ¹H-NMR (CD₃OD, δ, ppm): 8.45 (d, J=8.0 Hz, 1H), 8.40 (d, J=8.0 Hz, 1H), 8.16 (d, J= 9.2 Hz, 1H), 7.8-7.6 (m, 4H), 7.3 (dd, J= 8.0 Hz, 1H), 4.38 (s, 2H), 3.89 (s, 3H).

2-(10H-indolo[3,2-b]quinoline-11-carboxamide)acetic methyl ester (0.38, 1.14 mmol) were dissolved in 9.5 ml of dioxane and a 1M solution of lithium hydroxide (0.45 g in 19 ml) of a 1:1 water/methanol solution was added slowly. After 1.5 h of magnetic stirring, the solution was neutralized with a 2 M NaH₂PO₄ solution until pH 5.0 and some drops of diluted HCl to reach pH 3.0. A small precipitate formed, the solution was filtered and the precipitate was discarded. To the resulting aqueous solution ethyl acetate was added. The organic layer was separated and the aqueous phase was washed twice with ethyl acetate. The resulting organic phases are combined and dried (Na₂SO₄) yielding 2-(10H-indolo[3,2-b]quinoline-11carboxamide)acetic acid (0.36 g, 99%) as a reddish solid. HPLC (conditions described above) single peak of retention time 10.5 min. ¹H-NMR (CD₃OD, δ, ppm): 11.8 (wide s, 1H), 8.9 (m, 1H, NH), 8.2 (m, 2H), 8.07 (d, 1H), 7.7-7.5 (m, 4H), 7.2 (m, 1H), 3.92 (d, 2H). MS (Cl/NH₃) found 320.0, expected for C₁₈H₁₃N₃O₃ 319.

### Example 2: Preparation of 2-(acridine-9-carboxamide)acetic acid (Compound 1d).

Acridine-9-carboxylic acid (Compound **1b**, 0.5 g, 2.24 mmol) was dissolved in 20 ml of dimethylformamide together with N,N-diisopropylcarbodiimide (0.35 ml, 2.24 mmol) and 1-hydroxybenzotriazole (0.30 g, 2.24 mmol). The mixture was stirred for 10 minutes. To this solution a mixture of glycine methyl ester hydrochloride (0.2 g, 2.24 mmol) and N,N-diisopropylethylamine (0.39 ml, 2.24 mmol) dissolved in dimethylformamide was added. After 2 hrs of magnetic stirring at room temperature N,N-diisopropylethylamine (0.2 ml, 1.12 mmol) were added and stirring was continued for 1 hour. The resulting mixture was concentrated to dryness and the residue was dissolved in ethyl acetate. The organic phase was washed with 5% sodium carbonate, saturated. NaCl, 0.1M sodium phosphate and saturated. NaCl aqueous solutions and dried (Na₂SO₄). Removal of the solvent and purification by chromatography on silica gel (0-4% methanol gradient over CH₂Cl₂) yielded 2-(acridine-9-carboxamide)acetic methyl ester (0.69, 70%) as a foam. HPLC (conditions in example 1) single peak of retention time 10.5 min. ¹H-NMR [CDCl₃, δ, ppm]: 8.07 (d, 2H), 8.0 (d, 2H), 7.64 (m, 2H), 7.46 (m, 2H), 4.35 (s, 2H), 3.78 (s, 3H). ¹³C-NMR [CDCl₃, δ, ppm]: 168, 166, 148.0, 130.7, 128.7, 126.9, 125.3, 122.3, 52.5, 41.7.

2-(acridine-9-carboxamide)acetic methyl ester (0.44, 1.49 mmol) were dissolved in 11 ml of dioxane and cooled with ice. 1M solution of lithium hydroxide (0.52 g in 22 ml) of a 1:1 water/methanol solution was added to the solution slowly. After 30 min of magnetic stirring, the solution was neutralized with a 2 M NaH₂PO4 solution until pH 5.0. A small precipitate formed, the solution was filtered and the precipitate was discarded. To the resulting aqueous solution diluted HCl was added until reaching pH 3.0 and a big precipitate is formed yielding 2-(acridine-9-carboxamide)acetic acid (0.23 g, 55% as a red solid. UV (λ max): 240, 359 nm. HPLC (conditions in example 1) single peak of retention time 7.6 min. ¹H-NMR [DMSO-d₆, δ, ppm]: 9.46 (m, 1H), 8.27 (d, 2H), 8.21 (d, 2H), 7.9 (m, 2H), 7.6 (m, 2H), 4.17 (m, 2H). ¹³C-NMR [DMSO-d₆, δ, ppm]: 171.2, 166.8, 148.2, 130.8, 129.2, 126.7, 126.1, 122.0, 41.6. MS (Cl/NH₃) found 281.0, expected for C₁₆H₁₂N₂O₃ 280.

### Example 3: N-(1,3-dihydroxybutan-2-yl)-10H-indolo[3,2-d]quinoline-11-carboxamide (Compound 2a, monomer Qut).

10H-indolo[3,2-d]quinoline-11-carboxylic acid (Compound **1a,** 0.25 g, 0.95 mmol) was dissolved in 10 ml of dimethylformamide together with N,N-diisopropylcarbodiimide (0.15 ml, 0.95 mmol) and 1-hydroxybenzotriazole (HOBt) (0.128 g, 0.95 mmol). The mixture was stirred for 10 minutes and L-threoninol (50 mg, 0.47 mmol) was added. After 24 hrs of magnetic stirring at room temperature the mixture was concentrated to dryness. The product was crystallized from chloroform yielding N-(1,3-dihydroxybutan-2-yl)-10H-indolo[3,2-d]quinoline-11-carboxamide (300 mg, 90%) of a red solid. HPLC (conditions in example 1) single peak of retention time 14.9 min. ¹H-NMR [DMSO-d₆, δ, ppm]: 8.41 (wide d, 1H, NH), 8.2 (m, 2H), 7.9 (m, 1H), 7.3-7.6 (m, 5H), 5.44 (wide, 2H, OH), 4.14 (m, 1H, CH), 3.99 (m, 1H, CH), 3.4-3.6 (m, 2H, CH₂), 1.21 (d, J=6.6 Hz, 3H, CH₃). MS (CI/NH₃) found 350.1, expected for C₂₀H₁₉N₃O₃ 349.

### Example 4: N-(1,3-dihydroxybutan-2-yl)acridine-9-carboxamide (Compound 2b, monomer Act).

Acridine-9-carboxylic acid (Compound **1b,** 0.5 g, 2.24 mmol) was dissolved in 20 ml of dimethylformamide together with N,N-diisopropylcarbodiimide (0.35 ml, 2.24 mmol) and 1-hydroxybenzotriazole (0.303 g, 2.24 mmol). The mixture was stirred for 10 minutes and L-threoninol (117 mg, 1.12 mmol) was added. After 24 hrs of magnetic stirring at room temperature the mixture was concentrated to dryness. Removal of the solvent and purification by chromatography on silica gel (0-2% methanol gradient over CH₂Cl₂) yielded N-(1,3-dihydroxybutan-2-yl)acridine-9-carboxamide (0.69 g, 70%) as a foam. HPLC (conditions in example 1) single peak of retention time 9.1 min. ¹H-NMR [CDCl₃, δ, ppm]: 8.82 (m, 1H, NH), 8.35 (m, 2H), 8.05 (m, 2H), 7.8 (m, 2H), 7.6 (m, 2H), 5.3 (s, 2H, OH), 4.21 (m, 1H, CH), 3.85 (m, 1H, CH), 3.49 (m, 2H, CH₂), 1.26 (d, 3H, CH₃). MS (Cl/NH₃) found 311.1, expected for C₁₈H₂₀N₂O₃ 312.

### Example 5: N-((1,3-dihydroxybutan-2-ylcarbamoyl)methyl)-10H-indolo[3,2-dlquinoline-11-carboxamide (2c, monomer Qgt).

2-(10H-Indolo[3,2-b]quinoline-11carboxamide)acetic acid (Compound **1c,** 0.32 g, 1 mmol) was dissolved in 10 ml of dimethylformamide together with N,N-diisopropylcarbodiimide (0.15 ml, 1 mmol) and 1-hydroxybenzotriazole (0.13 g, 1 mmol). The mixture was stirred for 10 minutes and L-threoninol (105 mg, 1 mmol) was added. After 24 hrs of magnetic stirring at room temperature the mixture was concentrated to dryness. The product was crystallized from CH₂Cl₂ yielding N-((1,3-dihydroxybutan-2-ylcarbamoyl)methyl)-10H-indolo[3,2-d]quinoline-11-carboxamide (380 mg, 93%) of a red solid. HPLC (conditions in example 1) single peak of retention time 10.9 min. ¹H-NMR [DMSO-d6, δ-ppm] : 11.5 (s, 1H), 9.2 (t, 1H), 8.5 (d, 1H), 8.2 (d, 1H), 7.7 (m, 4H), 7.3 (m,2H), 4.2 (d, 1H), 4. 0 (m, 1H), 3.8 (m, 1H), 3.7 (d, 2H), 3.6 (d, 1H), 1.1 (d, 3H). MS (CI/NH₃) found 395.2, expected for C₂₂H₂₂N₄O₅ 394.

### Example 6: N-((1,3-dihydroxybutan-2-ylcarbamoyl)methyl)acridine-9-carboxamide (2d, monomer Agt).

2-(Acridine-9-carboxamide)acetic acid (Compound **1d**, 0.2 g, 0.67 mmol) was dissolved in 30 ml of dimethylformamide together with N,N-diisopropylcarbodiimide (0.1 ml, 0.67 mmol) and 1-hydroxybenzotriazole (0.09 g, 0.67 mmol). The mixture was stirred for 10 minutes and L-threoninol (105 mg, 1 mmol) was added. After 24 hrs of magnetic stirring at room temperature the mixture was concentrated to dryness. The product was crystallized from CH₂Cl₂ yielding N-((1,3-dihydroxybutan-2-ylcarbamoyl)methyl)acridine-9-carboxamide (250 mg, 97%) of a red solid. HPLC (conditions in example 1) single peak of retention time 9.3 min. ¹H-NMR [DMSO-d₆, δ, ppm]: 8.28 (d, 2H), 8.10 (d, 2H), 7.8 (m, 2H), 7.58 (m, 2H), 4.5 (wide, 1H, OH), 4.24 (m, 1H), 4.0 (m, 1H), 3.8 (m, 1H), 3.6-3.4 (m, CH₂), 1.14 (d, 2H, CH₃). MS (CI/NH₃) found 368.1, expected for C₂₀H₂₁N₃O₅ 367.

### Example 7: N-(3-hydroxy-1-(4,4'-dimethoxytrityl)oxybutan-2-yl)-10H-indolo[3,2-d]quinoline-11-carboxamide (Compound 3a).

N-(1,3-dihydroxybutan-2-yl)-10H-indolo[3,2-d]quinoline-11-carboxamide (Compound 2a, 0.31 g, 1 mmol) was reacted with 4,4-dimethoxytrityl chloride (0.33 g, 1 mmol) and N,N-dimethylaminopiridine (6 mg, 0.005 mmol) in 20 ml of pyridine. After 2 hr of magnetic stirring at room temperature, 84 mg (0.25 mmol) of 4,4-dimethoxytrityl chloride were added and the mixture was stirred for 30 min. The reaction was stopped with the addition of 0.5 ml of methanol and the mixture was concentrated to dryness. The residue was dissolved in CH₂Cl₂ and washed with 5% sodium bicarbonate and brine and dried. The resulting product was purified by chromatography on silica gel (0-2% methanol in CH₂Cl₂ with a 1% triethylamine) yielding 110 mg of N-(3-hydroxy-1-(4,4'-dimethoxytrityl)oxybutan-2-yl)-10H-indolo[3,2-d]quinoline-11-carboxamide (18%) as a foam. ¹H-NMR [CDCl₃, δ-ppm]: 9.3 (s, 1H), 8.5 (d, 1H), 8.3 (d, 1H), 8.4 (d, 1H), 7.7-7.2 (14 H, aromatics), 6.8 (m, 4H), 4.4 (d, 1H), 4.2 (m, 1H), 3.8 (m,1H), 3.7 (s, 6H), 3.3 (s, 1H), 1.1 (d, 3H).

### Example 8: N-(3-(N,N-diisopropylamino-2-cyanoethoxyphosphinyl)oxy-1-(4,4'-dimethoxytrityl)oxybutan-2-yl)-10H-indolo[3,2-d]quinoline-11-carboxamide (Compound 4a).

N-(3-hydroxy-1-(4,4'-dimethoxytrityl)butan-2-yl)-10H-indolo[3,2-d]quinoline-11-carboxamide (Compound **3a**, 220 mg, 0.38 mmol) was dried by coevaporation of dry acetonitrile and dissolved in 10 ml of dry dichloromethane. N, N-Diisopropylethylamine (0.2 ml, 1.14 mmol) was added and the mixture was purged with argon and cooled with an ice-water bath. O-2-Cyanoethyl-N,N-diisopropyl-chlorophosphoramidite (0.13 ml, 0.57 mmol) was added dropwise with continuous stirring. After the addition of the chlorophosphine, the mixture was allowed to warm to room temperature and stirred for 2 hr. The reaction was stopped by addition of 20 ml of CH₂Cl₂ containing 1% of triethylamine and the mixture washed with brine and dried. The resulting product was purified by chromatography on silica gel (hexane /ethyl acetate (2:1) + 1% triethylamine) yielding 160 mg of N-(3-(N,N-diisopropylamino-2-cyanoethoxyphosphinyl)oxy-1-(4,4'-dimethoxytrityl)oxybutan-2-yl)-10H-indolo[3,2-d]quinoline-11-carboxamide (53%) as a foam. ³¹P-NMR [CDCl₃, δ, ppm]: 148.4. ¹H-NMR [CDCl₃, δ-ppm]: 9.3 (s, 1H), 8.5 (d, 1H), 8.3 (d, 1H), 8.4 (d, 1H), 7.7-7.2 (14 H, aromatics), 6.8 (m, 4H), 4.7 (m, 2H), 4.4 (d, 1H), 4.2 (m, 1H), 3.8 (m,1H), 3.7 (s, 6H), 3.5 (m, 2H), 2.12 (t, 2H), (s, 1H), 1.1 (d, 3H).

### Example 9: N-(3-hydroxy-1-(4,4'-dimethoxytrityl)oxybutan-2-yl)acridine-9-carboxamide (Compound 3b).

N-(1,3-dihydroxybutan-2-yl)acridine-9-carboxamide (Compound **2b**, 0.45 g, 1.45 mmol) was reacted with 4,4-dimethoxytrityl chloride (0.54 g, 1.6 mmol) and N,N-dimethylaminopiridine (10 mg, 0.084 mmol) in 20 ml of pyridine. After 4 hr of magnetic stirring at room temperature, the reaction was stopped with the addition of 1 ml of methanol and the mixture was concentrated to dryness. The residue was dissolved in CH₂Cl₂ and washed with 5% sodium bicarbonate and brine and dried. The resulting product was purified by chromatography on silica gel (0-2% methanol in CH₂Cl₂ with a 1% triethylamine) yielding 490 mg of N-(3-hydroxy-1-(4,4'-dimethoxytrityl)oxybutan-2-yl)acridine-9-carboxamide (55%) as a foam. ¹H-NMR [CDCl₃, δ, ppm]: 8.3-8.2 (m, 2H), 8.1 (m, 2H), 7.8 (m, 2H), 7.5-7.1 (m, 11H), 6.8-6.7 (m, 4H), 4.5 (m, 1H, OH), 4.2 (m, 1H), 3.7 (m, 7H), 3.5 (m, 2H, CH₂), 1.1 (d, 3H, CH₃).

### Example 10: N-(3-(N,N-diisopropylamino-2-cyanoethoxyphosphinyl)oxy-1-(4,4'-dimethoxytrityl)oxybutan-2-yl)acridine-9-carboxamide (Compound 4b).

N-(3-hydroxy-1-(4,4'-dimethoxytrityl)oxybutan-2-yl)acridine-9-carboxamide (Compound 3b, 190 mg, 0.31 mmol) was dried by coevaporation of dry acetonitrile and dissolved in 5 ml of dry dichloromethane. N, N-Diisopropylethylamine (0.33 ml, 1.8 mmol) was added and the mixture was purged with argon and cooled with an ice-water bath. O-2-Cyanoethyl-N,N-diisopropyl-chlorophosphoramidite (0.20 ml, 0.9 mmol) was added dropwise with continuous stirring. After the addition of the chlorophosphine, the mixture was allowed to warm to room temperature and stirred for 1.5 hr. The reaction was stopped by addition of 20 ml of CH₂Cl₂ containing 1% of triethylamine and the mixture washed with brine and dried. The resulting product was purified by chromatography on silica gel (hexane / ethyl acetate (3:2) + 1% triethylamine) yielding 210 mg of N-(3-(N,N-diisopropylamino-2-cyanoethoxyphosphinyl)oxy-1-(4,4'-dimethoxytrityl)oxybutan-2-yl)acridine-9-carboxamide (82%) as a foam. ³¹P-NMR [CDCl₃, δ, ppm]: 149.1, 148.3 (two diastereoisomers). ¹H-NMR [CDCl₃, δ, ppm]: 8.3-8.2 (m, 2H), 8.1 (m, 2H), 7.8 (m, 2H), 7.5-7.1 (m, 11H), 6.8-6.7 (m, 4H), 4.7 (m, 2H), 4.2 (m, 1H), 3.7 (m, 7H), 3.5 (m, 4H), 2.2 (t, 2H), 1.1-1.0 (m, 15H).

### Example 11: N-(3-hydroxy-1-(4,4'-dimethoxytrityl)oxybutan-2-ylcarbamoyl)methyl)-10H-indolo[3,2-d]quinoline-11-carboxamide (Compound 3c).

N-((1,3-dihydroxybutan-2-ylcarbamoyl)methyl)-10H-indolo[3,2-d]quinoline-11-carboxamide (Compound **2c**, 170 mg, 0.34 mmol) was reacted with 4,4-dimethoxytrityl chloride (0.17 g, 0.51 mmol) and N,N-dimethylaminopiridine (3.5 mg) in 10 ml of pyridine. After 5 hr of magnetic stirring at room temperature, the reaction was stopped with the addition of 1 ml of methanol and the mixture was concentrated to dryness. The residue was dissolved in CH₂Cl₂ and washed with 5% sodium bicarbonate and brine and dried. The resulting product was purified by chromatography on silica gel (0-5% methanol in CH₂Cl₂) yielding 120 mg of N-(3-hydroxy-1-(4,4'-dimethoxytrityl)oxybutan-2-ylcarbamoyl)methyl)-10H-indolo[3,2-d]quinoline-11-carboxamide (56%) as a foam. ¹H-NMR [CDCl₃, δ, ppm]: 11.7 (s, 1 H, NH), 9.3 (m, 1H, NH), 8.6 (d, 2H), 8.4 (d, 2H), 8.1 (d, 1H), 7.9-7.0 (m, 16H), 5.7 (wide, 1H, OH), 4.41 (m, 2H, CH₂), 4.2 (m, 1H, CH), 3.9 (m, 1H, CH), 3.7-3.5 (m, 8H, MeO DMT + CH₂) 1.2 (d, CH₃).

### Example 12: N-(3-hydroxy-1-(4,4'-dimethoxytrityl)oxybutan-2-ylcarbamoyl)methyl)acridine-9-carboxamide (Compound 3d).

N-((1,3-dihydroxybutan-2-ylcarbamoyl)methyl)acridine-9-carboxamide (Compound **2d**, 0.14 g, 0.38 mmol) was reacted with 4,4-dimethoxytrityl chloride (0.13 g, 0.39 mmol) and N,N-dimethylaminopiridine (2.3 mg, 0.019 mmol) in 10 ml of pyridine. After 3 hr of magnetic stirring at room temperature, 10 mg (0.03 mmol) of 4,4-dimethoxytrityl chloride were added and the mixture was stirred for 30 min. The reaction was stopped with the addition of 1 ml of methanol and the mixture was concentrated to dryness. The residue was dissolved in CH₂Cl₂ and washed with 5% sodium bicarbonate and brine and dried. The resulting product was purified by chromatography on silica gel (0-2% methanol in CH₂Cl₂ with a 1% triethylamine) yielding 140 mg of N-(3-hydroxy-1-(4,4'-dimethoxytrityl)oxy-butan-2-ylcarbamoyl)methyl)acridine-9-carboxamide (50%) as a foam. ¹H-NMR [CDCl₃, δ, ppm]: 8.22 (d, 2H), 8.12 (d, 2H), 7.78 (m, 2H), 7.5 (m, 2H), 7.4-7.1 (m, 9H, DMT), 6.82 (m, 4H, DMT), 6.6 (m, 1H, OH), 4.38 (m, 2H, CH₂), 4.18 (m, 1H, CH), 4.0 (m, 1H, CH), 3.74 (s, 6H, MeO DMT), 3.4 (m, 2H, CH₂), 1.18 (d, 3H, CH₃).

### Example 13: N-((2S, 3R)-1,3-dihydroxybutan-2-yl)-2-phenylquinoline-4-carboxamide (Compound 2e, monomer Pht).

2-Phenyl-4-quinolinecarboxylic acid (compound **1e**, 1.1 g, 4.7 mmol) was dissolved in DMF (10 mL). To this solution, 0.6 mL (4.7 mmol) of N,N'-diisopropylcarbodiimide and 0.63 g (4.7 mmol) of HOBt were added followed by 0.5 g (4.7 mmol) of (L)-threoninol. The resulting mixture was stirred overnight at room temperature and then concentrated to dryness. The residue was dissolved in CH₂Cl₂ and the product was precipitated by addition of saturated solution of NaHCO₃. The resulting precipitated was filtered and washed with Et₂O to yield the desired compound (1 g, 63%) as a white solid. HPLC (conditions in example 1) single peak of retention time 12.2 min. ¹H NMR [MeOD δ, ppm]: 8.27-8.12 (m, 4H), 7.83 (m, 1H), 7.81-7.52 (m, 5H ), 5.32 (m, 1H, (CHNH), 4.24 (m, 1H, (CHOH), 4.23-4.12 (m, 2H, (CH₂OH), 1.35 (d, *J* = 6.5 Hz, 3H, CH₃). MS (Cl/NH₃) found 337.1, expected for C₂₀H₂₀N₂O₃ 336.3.

### Example 14: N-((2S, 3R)-1-(4,4'-dimethoxytrityloxy)-3-hydroxybutan-2-yl)-2-phenylquinoline-4-carboxamide (Compound 3e).

N-((2S, 3R)-1,3-dihydroxybutan-2-yl)-2-phenylquinoline-4-carboxamide (compound **2g**, 0.5 g, 1.48 mmol) was reacted with 4,4-dimethoxytrityl chloride (0.6 g, 1.78 mmol) and N,N-dimethylaminopiridine (10.3 mg, 0.08 mmol) in 20 ml of pyridine. After 4 hr of magnetic stirring at room temperature, 100 mg (0.3 mmol) of 4,4-dimethoxytrityl chloride were added and the mixture was stirred for 1 hr. The reaction was stopped with the addition of 1 ml of methanol and the mixture was concentrated to dryness. The residue was dissolved in CH₂Cl₂ and washed with 5% sodium bicarbonate and brine and dried. The resulting product was purified by chromatography on silica gel (0-2% methanol in CH₂Cl₂) yielding 0.9 g of N-((2S, 3R)-1-(4,4'-dimethoxytrityloxy)-3-hydroxybutan-2-yl)-2-phenylquinoline-4-carboxamide (95%) as a foam. ¹H-NMR [CDCl₃, δ, ppm]: 8.26 (d, 1H, Ar), 8.18 (d, 1H, Ar) 8.08 (m, 2H, Ar) 7.9(s, 1H, Ar), 7.8-7.1 (m, 14H, Ar, DMT), 6.8 (m, 4H, DMT), 4.6 (m, 1H, OH), 4.25 (m, 1H, CH), 3.8-3.6 (m, 7H, MeO DMT, CH), 3.4 (m, 2H, CH₂), 1.15 (d, 3H, CH₃).

### Example 15. N-((2S, 3R)-3-(N,N-diisopropylamino-2-cyanoethoxyphosphinyl)oxy-1-(4,4'-dimethoxytrityloxy)-butan-2-yl)-2-phenylquinoline-4-carboxamide (compound 4e).

N-((2S, 3R)-1-(4,4'-dimethoxytrityloxy)-3-hydroxybutan-2-yl)-2-phenylquinoline-4-carboxamide (280 mg, 0.44 mmol) was dried by coevaporation of dry acetonitrile and dissolved in 5 ml of dry dichloromethane. N, N-Diisopropylethylamine (0.23 ml, 1.3 mmol) was added and the mixture was purged with argon and cooled with an ice-water bath. O-2-Cyanoethyl-N,N-diisopropyl-chlorophosphoramidite (0.15 ml, 0.65 mmol) was added dropwise with continuous stirring. After the addition of the chlorophosphine, the mixture was allowed to warm to room temperature and stirred for 30 min. The reaction was stopped by addition of 20 ml of CH₂Cl₂ containing 1% of triethylamine and the mixture washed with brine and dried. The resulting product was purified by chromatography on silica gel (hexane /ethyl acetate (3:1) + 1% triethylamine) yielding 220 mg of N-((2S, 3R)-3-(N,N-diisopropylamino-2-cyanoethoxyphosphinyl)oxy-1-(4,4'-dimethoxytrityloxy)-butan-2-yl)-2-phenylquinoline-4-carboxamide (60%) as a foam. ³¹P-NMR [CDCl₃, δ, ppm]: 148.5. ¹H-NMR [CDCl₃, δ, ppm]: 8.24 (m, 1H, Ar), 8.16 (m, 1H, Ar), 7.9 (s, 1H, Ar), 7.8 (m, 1H, Ar), 7.6-7.1 (m, 15H, Ar, DMT), 6.8 (m, 4H, DMT), 4.3 (m, 1H, CH), 4.1 (m, 2H, CH₂), 3.8-3.4 (m, 11H, MeO DMT, CH isopropyl, CH₂), 2.1 (m, 2H, CH₂CN), 1.3-1.1 (m, 15H, CH₃ threoninol and CH₃ isopropyl).

### Example 16. N-((2S, 3R)-1,3-dihydroxybutan-2-yl)-(4a, 10a-dihydro-10,11-diazabenzo[b]fluoren-10-yl)acetamide (Compound 2f, monomer Nct).

(4a, 10a-Dihydro-10,11-diazabenzo[b]fluoren-10-yl) acetic acid (compound 1f, 0.27 g, 1.0 mmol) was dissolved in DMF (10 mL). To this solution, 0.15 ml (1 mmol) of N,N'-diisopropylcarbodiimide and 0.135 g (1 mmol) of HOBt were added followed by 0.10 g (1 mmol) of (L)-threoninol. The resulting mixture was stirred overnight at room temperature and then concentrated to dryness. The residue was treated with CH₂Cl₂, and the desired product was not soluble. The resulting solution containing the impurities was filtered out and the residual solid was isolated yielding 0.19 g (52% yield) of a brown solid that was used in the following step without further purification. TLC (5% methanol in CH₂Cl₂) Rf 0.31. HPLC (conditions in example 1) single peak of retention time 15.1 min ¹H NMR [CD₃OD δ, ppm]: 9.0-7.3 (m, 9H), 5.7 (s, 2H), 4.0 (m, 1H), 3.8 (m, 1H), 2.9 (dd, 2H, CH₂OH), 1.10 (d, 3H, CH₃). MS (Cl/NH₃) found 364.3, expected for C₂₁H₂₁N₃O₃ 363.2.

### Example 17. N-((2S, 3R)-1-bis(4-methoxyphenyl)-phenyl-methoxy)-3-hydroxybutan-2-yl)-2-(4a, 10a-dihydro-10,11-diazabenzo[b]fluoren-10-yl) acetamide (Compound 3f).

N-((2S, 3R)-1,3-dihydroxybutan-2-yl)-(Neocriptolepinyl)acetamide (compound **2f**, 0.19 g, 0.52 mmol) was reacted with 4,4-dimethoxytrityl chloride (0.21 g, 0.62 mmol) and N,N-dimethylaminopiridine (3.6 mg) in 20 ml of pyridine. After 5 hr of magnetic stirring at room temperature, the reaction was stopped with the addition of 1 ml of methanol and the mixture was concentrated to dryness. The residue was dissolved in CH₂Cl₂ and washed with brine and dried. The resulting product was purified by chromatography on silica gel (0-1% methanol in CH₂Cl₂) yielding 30 mg of N-((2S, 3R)-1-bis(4-methoxyphenyl)-phenyl-methoxy)-3-hydroxybutan-2-yl)-2-(4a, 10a-dihydro-10,11-diazabenzo[b]fluoren-10-yl) acetamide (9%). ¹H NMR [CDCl₃ δ, ppm]: 8.7-6.9 (m, 18H), 6.45 (d, 4H), 5.1 (dd, 2H), 3.9 (m, 1H), 3.8 (m, 1H), 3.7 (s, 6H, OMe DMT), 3.0 (m, 2H, CH₂OH), 1.10 (d, 3H, CH₃).

### Example 18: (R)-3-(Acridin-9-ylamino)propane-1,2-diol (Compound 5a).

9-chloro-acridine (1 g, 4.68 mmol) and (R)-3-amino-propane-1,2-diol (0.42 g, 4.68 mmol) in 2-ethoxyethanol (40 ml) was heated at 120°C for 30 min. Removal of the solvent yielded the desired compound (0.9 g, 75%) as a yellow solid. HPLC (conditions in example 1) single peak of retention time 8.4 min. ¹H-NMR [MeOD δ, ppm]: 8.01 (m, 2H), 7.84 (m, 2H), 7.60 (m, 2H ), 4.37-4.28 (m, 2H, (CH₂NH), 4.17 (m, 1H, CHOH), 3.82-3.75 (m, 2H, CH₂OH). MS (CI/NH₃) found 269.1, expected for C₁₆H₁₆N₂O₂ 268.3.

### Example 19: (R)-3-(Acridin-9-ylamino)-1-(4,4'-dimethoxytrityl)oxypropane-2-ol (Compound 6a).

(R)-3-(acridin-9-ylamino)propane-1,2-diol (compound **5a**, 400 mg, 1.49 mmols) was dried by coevaporation of dry pyridine and dissolved in 20 ml of dry pyridine. N,N-dimethyaminopyridine (10.4 mg, 0.085 mmols) was added and then 4,4'-dimetoxytrityl chloride (555mg, 1.63 mmols). After 5 h of magnetic stirring at room temp. the reaction was stopped with the addition of 1 ml of methanol and the mixture was concentrated to dryness. The residue was dissolved in dichloromethane and washed with 5 % sodium bicarbonate and brine and dried. The resulting product was purified by chromatography on silica gel (0-1.5 % methanol in dichloromethane with 1 % triethylamine) yielding 320 mg of (R)-3-(Acridin-9-ylamino)-1-(4,4'-dimethoxytrityl)oxypropane-2-ol (37.6 %) as a foam. ¹H-NMR [CDCl₃, δ-ppm]: 8.1 (m, 2H), 7.8 (m, 2H), 7.1-7.4 (m, 13 H arom), 6.7 (m, 4H, DMT), 4.2 (m, 2H, CH₂CN), 3.7 (s, 6H, OMe), 3.4-3.6 (m, 4H, CH₂O, CH₂ODMT)

### Example 20: O-[(R)-3-(Acridin-9-ylamino)-1-(4,4'-dimethoxytrityl)oxypropane-2-yl]-N,N-diisopropylamino-2-cyanoethoxyphosphoramidite (Compound 7a).

(R)-3-(Acridin-9-ylamino)-1-(4,4'-dimethoxytrityl)oxypropane-2-ol (compound **6a**, 250 mg, 0.44 mmols) was dried by coevaporation of dry acetonitrile and dissolved in 5 ml of dry dichloromethane. N, N-Diisopropylethylamine (0.228 ml, 1.57 mmol) was added and the mixture was purged with argon and cooled with an ice-water bath. O-2-Cyanoethyl-N,N-diisopropyl-chlorophosphoramidite (0.146 ml, 0.65 mmol) was added dropwise with continuous stirring. After the addition of the chlorophosphine, the mixture was allowed to warm to room temperature and stirred for 1 hr. The reaction was stopped by addition of 50 ml of CH₂Cl₂ containing 1% of triethylamine and the mixture washed with brine and dried. The resulting product was purified by chromatography on silica gel (0-1.5 % methanol in dichloromethane with 1 % triethylamine) yielding 300 mg of O-[(R)-3-(Acridin-9-ylamino)-1-(4,4'-dimethoxytrityl)oxypropane-2-yl]-N,N-diisopropylamino-2-cyanoethoxyphosphoramidite (90 %) as a foam. ¹H-NMR [CDCl₃, δ-ppm] : 8.1 (m, 2H), 7.8 (m, 2H), 7.2-7.4 (m, 13 H arom), 6.7 (m, 4H, DMT), 4.2 (m, 3H, CH, CH₂), 3.7-3.4 (m, 12H, OMe DMT, 2 CH isopropyl, 2 CH₂), 2.8 (m, 2H), 1.25 (m, 12H). ³¹P-NMR [CDCl₃, δ, ppm]: 150.0, 149.3 (two diastereoisomers).

### Example 21. (S)-3-(5-Methyl-5H-indolo[3,2b]quinolin-11-ylamino)propane-1,2-diol (Compound 5b).

A solution of 11-chloro-5-metil-5H-indolo[3,2-b]quinoline (20 mg, 0.075 mmol) and (S)-3-amino-propane-1,2-diol (29 mg, 0.32 mmol) in 2-ethoxyethanol (10 ml) was heated at 120°C for 10 min. Removal of the solvent yielded the desired compound (15 mg, 63%) as an orange solid. ¹H NMR [CDCl₃ δ, ppm]: 8.58 (m, 2H), 8.31-8.03 (m, 2H), 7.77 (m, 3H ), 7.43 (m, 1H), 4.77 (s, 3H, NCH₃), 4.25 (m, 2H, CH₂), 3.69 (m, 1H, CH), 3.58-3.50 (m, 2H, CH₂). MS (CI/NH₃) found 322.2, expected for C₁₉H₁₉N₃O₂ 321.3.

### Example 22: (S)-3-(5-Methyl-5H-indolo[3,2b]quinolin-11-ylamino)-1-(4,4'-dimethoxytrityl)oxypropane-2-ol (Compound 6b).

(S)-3-(5-Methyl-5*H*-indolo[3,2*b*]quinolin-11-ylamino)propane-1,2-diol (compound **5b**, 300 mg, 0.93 mmol) was reacted with dimethoxytrityl chloride using N,N,-dimethylaminopyridine as catalyst in pyridine as described in example 7. Yield: 28%. ¹H-NMR [Cl₃CD δ, ppm]: 13.1 (s, 1H, NH), 9.2 (m, 1H), 8.6 (m, 1H), 8.2 (m, 1H), 7.9 (m, 2H), 7.7 (m, 1H), 7.5 (m, 2H), 7.3-7.1 (m, 9H, DMT), 6.8-6.7 (m, 4H, DMT), 4.3-4.1 (m, 1H, CH), 3.7 (s, 6H, MeO DMT), 3.5-3.3 (m, 2H, CH₂).

### Example 23: [{2-[Acridine-9-carboxamide]-acetyl}-(2-tert-butoxycarbonylamino-ethyl)-aminol-acetic acid methyl ester (Compound 8a).

2-(Acridine-9-carboxamide)acetic acid (**1d**) (0.094 g, 0.33 mmol) was dissolved in DMF (2 mL). To this solution, 0.084 ml (0.5 mmol) of N-ethylmorpholine and 0.055 g (0.33 mmol) of HOOBt were added followed by a solution of 0.064 g (0.27 mmol) of methyl N-[2-(*tert*-butoxycarbonylamino)ethyl]glycinate (c.f. P. Clivio et al. "Synthesis and photochemical behaviour of peptide nucleic acid dimmers and analogues containing 4-thiothymine: Unprecedent (5-4) photoadduct reversion" J. Am. Chem. Soc. 1998, vol. 120, 1157-1166) in 2 ml of DMF and 0.053 ml (0.42 mmol) of N,N'-diisopropylcarbodiimide. The resulting mixture was stirred overnight at room temperature and then concentrated to dryness. The residue was dissolved in CH₂Cl₂ and the solution was washed with water and brine. The organic phase was dried and concentrated to dryness. The resulting product was purified on alumina (CH₂Cl₂:CH₃OH / 99:1) yielded the desired compound (64 mg, 40%) as a foam. ¹H-NMR [MeOD δ, ppm]: 8.41 (m, 2H), 8.21 (m, 2H), 7.91 (m, 2H), 7.67 (m, 2H ), 4.61 (s, 2H, (CH₂CON), 4.43 (s, 2H, (CH₂COOCH₃), 3.82 (s, 3H, COOCH₃), 3.65 and 3.33 (m, 4H, NCH₂CH₂NH), 1.49 (bs, 9H, C(CH₃)₃). MS (CI/NH₃) found 495.2, expected for C₂₆H₃₀N₄O₆ 494.5.

### Example 24: [(2-tert-Butoxycarbonylamino-ethyl)-{2-[10H-indolo[3,2-b]quinoline-11-carbonyl)amino]-acetyl}-amino)acetic acid methyl ester (Compound 8b).

2-(10H-indolo[3,2-b]quinoline-11carboxamide)acetic acid (**1c**) (0.061 g, 0.19 mmol) was dissolved in DMF (2 ml). To this solution, 0.049 ml (0.43 mmol) of N-ethylmorpholine and 0.032 g (0.19 mmol) of HOOBt were added followed by a solution of 0.045 g (0.19 mmol) of methyl N-[2-(*tert*-butoxycarbonylamino)ethyl]glycinate (c.f. P. Clivio et al. "Synthesis and photochemical behaviour of peptide nucleic acid dimmers and analogues containing 4-thiothymine: Unprecedent (5-4) photoadduct reversion" J. Am. Chem. Soc. 1998, vol. 120, 1157-1166) in 2 ml of DMF and 0.031 ml (0.24 mmol) of N,N'-diisopropylcarbodiimide. The resulting mixture was stirred overnight at room temperature and then concentrated to dryness. The residue was dissolved in CH₂Cl₂ and the solution was washed with water and brine. The organic phase was dried and concentrated to dryness. The resulting product was purified on alumina (CH₂Cl₂:CH₃OH / 99:1) yielded the desired compound (62 mg, 62%) as a foam. ¹H-NMR [MeOD δ, ppm]: 8.51 (m, 1H), 8.42 (m, 1H), 8.29 (m, 1H), 7.75 (m, 1H ), 7.68 (m , 2H), 7.60 (m, 1H), 7.36 (m, 1 H), 4.63 (s, 2H, (CH₂CON), 4.45 (s, 2H, (CH₂COOCH₃), 3.82 (s, 3H, COOCH₃), 3.66 and 3.33 (m, 4H, NCH₂CH₂NH), 1.49 (bs, 9H, C(CH₃)₃). MS (Cl/NH₃) found 534.2, expected for C₂₈H₃₀N₅O₆ 532.5.

### Example 25: Triethylammonium [{2-[Acridine-9-carbonyl)-amino]-acetyl}-(2-tert-butoxycarbonylamino-ethyl)-amino]-acetate (Compound 9a).

[{2-[Acridine-9-carbonyl)-amino]-acetyl}-(2-*tert*-butoxycarbonylamino-ethyl)-amino]-acetic acid methyl ester (0.096 g, 0.19 mmol) was treated with 0.2 ml of a concentrated solution of NaOH in 6 ml of EtOH : H₂O (1:2) solution at room temperature for 2h. The reaction mixture was concentrated to dryness. The residue was dissolved in the minimum amount of water and acidified to pH = 2. The resulting residue was purified on silica gel (CH₂Cl₂:CH₃OH /90:10) containing 1% of triethylamine yielded the desired compound (37 mg, 34%) as a triethylammonium salt. ¹H NMR [MeOD δ, ppm]: ]: 8.44 (m, 2H), 8.20 (m, 2H), 7.91 (m, 2H ), 7.68 (m, 2H ), 4.61 (s, 2H, (CH₂CON), 4.47 (s, 2H, (CH₂COO), 3.62 and 3.33 (m, 4H, NCH₂CH₂NH), 1.49 (bs, 9H, C(CH₃)₃).

MS (CI/NH₃) found 481.3, expected for C₂₅H₂₈N₄O₆ 480.7.

### Example 26: Triethylammonium [(2-tertbutoxycarbonylamino-ethyl)-{2-[(10H-indolo[3,2-b]quinoline-11-carbonyl)-amino]-acetyl}-amino)-acetate (Compound 9b).

[(2-tert-Butoxycarbonylamino-ethyl)-{2-[10H-indolo[3,2-b]quinoline-11-carbonyl)amino]-acetyl}-amino)acetic acid methyl ester (0.057 g, 0.1 mmol) was treated with 0.1 ml of a concentrated solution of NaOH in 6 ml of EtOH : H₂O (1:2) solution at room temperature for 2h. The reaction mixture was concentrated to dryness. The residue was dissolved in the minimum amount of water and acidified to pH = 2. The resulting residue was purified on silica gel (CH₂Cl₂:CH₃OH / 90:10) containing 1% of triethylamine yielded the desired compound (13 mg, 20%) as a triethylammonium salt. ¹H NMR [MeOD δ, ppm]: ]: 8.48 (m, 1H), 8.35 (m, 1H), 8.29 (m, 1H ), 7.75 (m, 1H ), 7.68 (m , 2H), 7.60 (m, 1H), 7.35 (m, 1H), 4.63 (s, 2H, (CH₂CON), 4.48 (s, 2H, (CH₂COO), 3.62 and 3.33 (m, 4H, NCH₂CH₂NH), 1.49 (bs, 9H, C(CH₃)₃). MS (Cl/NH₃) found 520.2, expected for C₂₇H₂₉N₅O₆ 519.5.

### Example 27: O-{2-N-(Acridine-9-carbamoyl)-(1-hydroxybut-3-yl)} and O-{2-N-(10H-indolo[3,2-d]quinoline-11-carbamoyl)-3-hydroxybut-1-yl} phosphate (1-Act-p-Qut-3).

Controlled pore glass loaded with N-(3-hydroxy-1-(4,4'-dimethoxytrityl)oxybutan-2-yl)-10H-indolo[3,2-d]quinoline-11-carboxamide (compound **3a**) prepared as described in example 7 (1 µmol) was treated with a 3 % trichloroacetic acid solution in dichloromethane. After treatment and washing with acetonitrile N-(3-(N,N-diisopropylamino-2-cyanoethoxyphosphynyl)oxy-1-(4,4'-dimethoxytrityl)oxybutan -2-yl)acridine-9-carboxamide (compound **4b**, 20 µmol, 16.5 mg) dissolved in 200 µl of anhydrous ACN and tetrazole (80 mmols, 100 µl of a 0.8 M solution in acetonitrile) were added under argon atmosphere. After 5 minutes, the solution was removed and the glass support was washed with acetonitrile. Oxidation of the resulting phosphite-triester to phosphate-triester was done with an iodine solution (I₂ in water/pyridine/THF 2/20/80), during 2 minutes. Additional acetonitrile and dichloromethane washes were performed. Finally, deprotection of the dimethoxytrityl group from the support was done using trichloroacetic acid 3 % . Dimer 1-Act-p-Qut-3 was released from the resin using 32 % ammonia solution during 1.5 h at 55 °C. The ammonia mixture was filtered and concentrated to dryness. The residue was passed over a Dowex 50 X 4 (Na⁺ form) column to exchange ammonia ions for Na⁺ ions. Fractions containing the desired product were analysed by HPLC, UV and MS.
HPLC solutions were solvent A: 5% acetonitrile in 100 mM triethylammonium acetate, pH 6.5 and solvent B: 70 % acetonitrile in 100 mM triethylammonium acetate (pH 6.5). Column: PRP-1 (Hamilton) 250x 10 mm. Flow rate 3 ml/min linear gradient from 15 to 80 in B. HPLC chromatogram shows an unique peak at 12.7 min. MS (MALDI-TOF): found 766.5 [M+2Na⁺], expected for C₃₈H₃₆N₅O₈P 721.7. Yield: 45%.

### Example 28: O-{2-N-(10H-indolo[3,2-d]quinoline-11-carbamoyl)-(1-hydroxybut-3-yl)} and O-(2-N-{10H-indolo[3,2-d]quinoline-11-carbamoyl}-3-hydroxybut-1-yl) phosphate (1-Qut-p-Qut-3).

N-(3-(N,N-diisopropylamino-2-cyanoethoxyphosphynyl)oxy-1-(4,4'-dimethoxytrityl)oxybutan-2-yl)-10H-indolo[3,2-d]quinoline-11-carboxamide (compound **4a**) was coupled to controlled pore glass loaded with N-(3-hydroxy-1-(4,4'-dimethoxytrityl)oxybutan-2-yl)-10H-indolo[3,2-d]quinoline-11-carboxamide (compound **3a**) prepared as described in example 7 (1 µmol) as described in example 39. After the exchange sodium column, the desired product was analysed as above. HPLC chromatogram of the product shows the presence of one major peak with a retention time of 14.4 min (see HPLC conditions in example 27). MS (MALDI-TOF): found 761.3 [M+H⁺], 783.3 [M-H⁺+Na⁺], expected for C₄₀H₃₇N₆O₈P 760.7. Yield: 12%.

### Example 29: O-{2-N-(Acridine-9-carbamoyl)-(1-hydroxybut-3-yl)} phosphate (3-1) O-{2-N-(10H-indolo[3,2-d]quinoline-11-carbamoyl)-3-oxybut-1-yl} phosphate (3-1) O-(2-N-{10H-indolo[3,2-d]quinoline-11-carbamoyl}-3-hydroxybut-1-yl)(1-Act-p-Qut-p-Qut-3).

Trimer 1-Act-p-Qut-p-Qut-3 was obtained by the addition of the monomer N-(3-(N,N-diisopropylamino-2-cyanoethoxyphosphynyl)oxy-1-(4,4'-dimethoxytrityl)oxybutan -2-yl)acridine-9-carboxamide (compound 4a) to 1-Qut-p-Qut-3 dimer described in example 40. The coupling was performed as described in example 39. After ammonia deprotection the desired compound was purified by HPLC. Retention time in HPLC (see conditions in example 27) 15.3 min. MS (MALDI-TOF): found 1139.8 [M+H⁺] 1117.7 [M-OH⁻+H⁺], expected for C₅₈H₅₄N₈O₁₃P₂ 1133.0. Yield: 7%.

### Example 30: O-{2-N-(Acridine-9-carbamoyl)-(1-hydroxybut-3-yl)}phosphate (3-1) O-{2-N-(acridine-9-carbamoyl)-(1-hydroxybut-3-yl)}phosphate (3-1) O-{2-N-(acridine-9-carbamoyl)-(1-hydroxybut-3-yl)}phosphate (3-1) O-{2-N-(acridine-9-carbamoyl)-(1-hydroxybut-3-yl)}phosphate (3-1) O-{2-N-(acridine-9-carbamoyl)-(1-hydroxybut-3-yl)} phosphate (3-1) O-{2-N-(acridine-9-carbamoyl)-3-hydroxybut-1-yl}(1-Act-p-Act-p-Act-p-Act-p-Act-p-Act-3).

N-(3-(N,N-diisopropylamino-2-cyanoethoxyphosphynyl)oxy-1-(4,4'-dimethoxytrityl)oxybutan -2-yl)acridine-9-carboxamide (compound 4b) was reacted to a glass support loaded with N-(3-hydroxy-1-(4,4'-dimethoxytrityl)oxybutan-2-yl)acridine-9-carboxamide (compound **3b**) prepared as described in example 9. The coupling was performed as described in example 39. The addition of N-(3-(N,N-diisopropylamino-2-cyanoethoxyphosphynyl)oxy-1-(4,4'-dimethoxytrityl)oxybutan -2-yl)acridine-9-carboxamide (compound **4b**) was repeated 5 times in order to obtain the hexamer. After ammonia deprotection the desired compound was purified by HPLC. Retention time in HPLC (see conditions in example 27) 11.6 min. MS (MALDI-TOF): found 2172.3 [M+H⁺], expected for C₁₀₈H₁₀₃N₁₂O₂₈P₅ 2171.8. Yield: 1.4 mg (60%).

### Example 31: O-{2-N-(Acridine-9-carbamoyl)-(1-hydroxybut-3-yl)} and O-{3-(5-methyl-5H-indolo[3,2b]quinolin-11-ylamino-(S)-(2-hydroxyprop-3-yl} phosphate (1-Act-p-Cra-2).

N-(3-(N,N-diisopropylamino-2-cyanoethoxyphosphynyl)oxy-1-(4,4'-dimethoxytrityl)oxybutan -2-yl)acridine-9-carboxamide (compound **4b**) was coupled to controlled pore glass loaded with (S)-3-(5-Methyl-5*H-*indolo[3,2*b*]quinolin-11-ylamino)-1-(4,4'-dimethoxytrityl)oxypropane-2-ol (compound **6c**) prepared as described in example 34 (1 µmol). The coupling was performed as described in example 39. After ammonia deprotection the desired compound was purified by HPLC. Retention time in HPLC (see conditions in example 27) 13.0 min. MALDI-TOF mass spectrometry: found 694.64 [M+H⁺], expected for C₃₇H₃₆N₅O₇P 693.65. Yield: 13%.

### Example 32: O-{2-N-(Acridine-9-carbamoyl)-(1-hydroxybut-3-yl)} and O-{3-(5-methyl-5H-indolo[3,2b]quinolin-11-ylamino-(S)-(2-hydroxyprop-3-yl} phosphorotioate (1-Act-ps-Cra-2).

N-(3-(N,N-diisopropylamino-2-cyanoethoxyphosphynyl)oxy-1-(4,4'-dimethoxytrityl)oxybutan -2-yl)acridine-9-carboxamide (compound **4b**) was coupled to controlled pore glass loaded with (S)-3-(5-Methyl-5*H-*indolo[3,2*b*]quinolin-11-ylamino)-1-(4,4'-dimethoxytrityl)oxypropane-2-ol (compound **6c**) prepared as described in example 34 (1 µmol). The coupling was performed as described in example 39 except that in this case sulfurization was performed with 1 ml of a solution of 10 mg of 3*H*-1,2-benzodithiol-3-one 1,1-dioxide in acetonitrile (1 min) (c.f. R.P. lyer et al., "The automated synthesis of sulfur-containing oligodeoxyribonucleotides using 3H-1,2-benzodithiol-3-one 1,1-dioxide as a sulfur-transfer reagent" J. Org. Chem. 1990, vol. 55, pp4693-4699 ) instead of oxidation with iodine solution. After ammonia deprotection the desired compound was purified by HPLC. Retention time in HPLC (see conditions in example 27) 15.0 and 15.5 min (2 disatereoisomers). MS (MALDI-TOF): found 708.4 [M], expected for C₃₇H₃₆N₅O₆PS 709.63. Yield: 20%.

### Example 33: O-[(R)-3-(Acridin-9-ylamino)-1-hydroxy-propane-2-yl]-phosphate (2-1)O-{2-N-(acridine-9-ylamino)-2-oxyprop-1-yl}phosphate(2-4) 4-hydroxybutiramide (1-Aca-p-Aca-p-butyramide)

4-Trityl-4-hydroxybutanoic acid was reacted with polystyrene loaded with Rink-amide linker (c.f. H. Rink, "Solid-phase synthesis of protected peptide fragments using a trialkoxy-diphenyl-methylester resin" Tetrahedron Lett., 1987, vol 28, pp3787). The resulting support was used for the assembly of the s. O-[(R)-3-(acridin-9-ylamino)-1-(4,4'-dimethoxytrityl)oxypropane-2-yl]-N,N-diisopropyl-amino-2-cyanoethoxy phosphoramidite (compound **7a**) was reacted to the support loaded with 4-trityl-hydroxybutanoic Rink amide. The coupling was performed as described in example 27. After the assembly of the dimer, the supports were treated with 0.5 M DBU solution for 1 min, washed with acetonitrile and treated with a solution contaning 95% trifluoroacetic acid and 5% water for 4 hr at room temperature. Retention time in HPLC (see conditions in example 27) 5.8 min. MS (MALDI-TOF): found 764.6 [M+H⁺], expected for C₃₆H₃₉N₅O₁₀P₂ 763.6. Yield: 25%.

### Example 34: O-{2-N-(2-phenylquinoline-4-carbamoyl-1-hydroxybutan-3-yl)} and O-{2-N-(acridine-9-carbamoyl)-3-hydroxybut-1-yl}phosphate (1-Pht-p-Act-3).

N-((2S, 3R)-3-(N,N-diisopropylamino-2-cyanoethoxyphosphinyl)oxy-1-(dimethoxytrityloxy)-butan-2-yl)-2-phenylquinoline-4-carboxamide (compound **4e**, example 15) was reacted with a glass support loaded with N-(3-hydroxy-1-(4,4'-dimethoxytrityl)oxybutan-2-yl)acridine-9-carboxamide (compound **3b**) prepared as described in example 9. The coupling was performed as described in example 27. After ammonia deprotection the desired compound was purified by HPLC. Retention time in HPLC (see conditions in example 27) 14.5 min. MS (MALDI-TOF): found 707.8 [M], expected for C₃₈H₃₇N₄O₅P 708.7. Yield: 22%.

### Example 35: O-{2-N-(2-phenylquinoline-4-carbamoyl-1-hydroxybutan-3-yl)} and O-{2-N-(2-phenylquinoline-4-carbamoyl-3-hydroxybutan-1-yl)}phosphate (1-Pht-p-Pht-3).

N-((2S, 3R)-3-(N,N-diisopropylamino-2-cyanoethoxyphosphinyl)oxy-1-(dimethoxytrityloxy)-butan-2-yl)-2-phenylquinoline-4-carboxamide (compound **4e**, example 15) was reacted with a glass support loaded with N-((2S, 3R)-3-hydroxy-1-(dimethoxytrityloxy)-butan-2-yl)-2-phenylquinoline-4-carboxamide (compound **3e**) prepared as described in example 14. The coupling was performed as described in example 27. After ammonia deprotection the desired compound was purified by HPLC. Retention time in HPLC (see conditions in example 27) 19.1 min. MS (MALDI-TOF): found 733.7 [M], expected for C₄₀H₃₉N₄O₈P 734.7. Yield: 18%.

### Example 36: O-{2-N-(acridine-9-carbamoyl)-1-hydroxybut-3-yl} and O-{2-N-(2-phenylquinoline-4-carbamoyl-3-hydroxybutan-1-yl)} phosphate (1-Act-p-Pht-3)

N-(3-(N,N-diisopropylamino-2-cyanoethoxyphosphinyl)oxy-1-(4,4'-dimethoxytrityl)oxybutan-2-yl)acridine-9-carboxamide (compound **4b**, example 10) was reacted with a glass support loaded with N-((2S, 3R)-3-hydroxy-1-(dimethoxytrityloxy)-butan-2-yl)-2-phenylquinoline-4-carboxamide (compound **3e**) prepared as described in example 14. The coupling was performed as described in example 27. After ammonia deprotection the desired compound was purified by HPLC. Retention time in HPLC (see conditions in example 27) 14.9 min. MS (MALDI-TOF): found 707.6 [M], expected for C₃₈H₃₇N₄O₈P 708.7. Yield: 24%.

### Example 37: O-{2-N-(2-phenylquinoline-4-carbamoyl-1-hydroxybutan-3-yl)} and O-(2-N-{10H-indolo[3,2-d]quinoline-11-carbamoyl}-3-hydroxybut-1-yl) (1-Pht-p-Qut-3)

N-((2S, 3R)-3-(N,N-diisopropylamino-2-cyanoethoxyphosphinyl)oxy-1-(dimethoxytrityloxy)-butan-2-yl)-2-phenylquinoline-4-carboxamide (compound **4e**, example 15) was reacted was reacted with a glass support loaded with N-(3-hydroxy-1-(4,4'-dimethoxytrityl)oxybutan-2-yl)-10H-indolo[3,2-d]quinoline-11-carboxamide (compound **3a**, example 7, 1 µmol). The coupling was performed as described in example 27. After ammonia deprotection the desired compound was purified by HPLC. Retention time in HPLC (see conditions in example 27) 16.8 min. MS (MALDI-TOF): found 746.6 [M], expected for C₄₀H₃₈N₅O₈P 747.7. Yield: 24%.

### Example 38: O-{2-N-(Acridine-9-carbamoyl)-(1-hydroxybut-3-yl)}phosphate (3-1) O-{2-N-(10H-indolo[3,2-d]quinoline-11-carbamoyl)-3-oxybut-1-yl} phosphate (3-1) O-{2-N-(acridine-9-carboxamido)acetamido]-(3-hydroxybut-1-yl)} (1-Act-p-Qut-p-Agt-3).

N-(3-(N,N-diisopropylamino-2-cyanoethoxyphosphynyl)oxy-1-(4,4'-dimethoxytrityl)oxybutan-2-yl)-10H-indolo[3,2-d]quinoline-11-carboxamide (compound **4a**) was coupled to controlled pore glass loaded with N-(3-hydroxy-1-(4,4'-dimethoxytrityl)oxybutan-2-ylcarbamoyl)methyl)acridine-9-carboxamide (compound 3d, 1 mol, example 12) as described in example 27. After coupling, the DMT group was removed and the resulting support was reacted with N-(3-(N,N-diisopropylamino-2-cyanoethoxyphosphinyl)oxy-1-(4,4'-dimethoxytrityl)oxybutan-2-yl)acridine-9-carboxamide (compound **4b**, example 10). The coupling was performed as described in example 40. After ammonia deprotection the desired compound was purified by HPLC. Retention time in HPLC (see conditions in example 27) 12.3 min. MS (MALDI-TOF): found 1152.2 [M+H⁺], expected for C₅₈H₅₆N₈O₁₄P₂ 1151.0. Yield: 20%.

### Example 39. (2S, 3R)-2-((9H-Fluoren-9-yl)methyloxycarbonyl)amino)butane-1-(4,4'-dimethoxytrityloxy)butan-3-ol.

(2S, 3R)-2-((9H-Fluoren-9-yl)methyloxycarbonyl)amino)butane-1,3-diol (0.4 g, 1.22 mmol) was reacted with 4,4-dimethoxytrityl chloride (0.5 g, 1.46 mmol) and N,N-dimethylaminopiridine (9.4 mg) in 20 ml of pyridine. After 3 hr of magnetic stirring at room temperature, 83 mg of 4, 4'-dimethoxytrityl chloride (0.24 mmol) were added and the reaction was stirred for 1 hour. After, the reaction was stopped with the addition of 1 ml of methanol and the mixture was concentrated to dryness. The residue was dissolved in CH₂Cl₂ and washed with brine and dried. The resulting product was purified by chromatography on silica gel (CH₂Cl₂) yielding 0.59 g of the desired DMT, Fmoc-protected derivative (93%) as a foam. TLC (5% methanol in CH₂Cl₂) Rf 0.68. ¹H-NMR [CDCl₃, δ, ppm]: 7.8-7.2 (m, 17H, Ar Fluorenyl, DMT), 6.8 (dd, 4H, Ar DMT), 5.4 (d, 2H), 4.4 (m, 1H), 4.3 (m, 1H), 4.2 (m, 1H), 4. 1 (m, 1H), 3.7 (s, 6H, OMe DMT), 3.6 (m, 1H), 3.45 (m, 1H), 3.27 (m, 1H), 2.8 (m, 1H), 1.16 (d, 3H, CH₃).

### Example 40. (2S, 3R)-2-((9H-Fluoren-9-yl)methyloxycarbonyl)amino)butane-1-(4,4'-dimethoxytrityloxy)butan-3-yl N,N-diisopropylamino-2-cyanoethyl phosphoramidite.

(2S, 3R)-2-((9H-Fluoren-9-yl)methyloxycarbonyl)amino)butane-1-(4,4'-dimethoxytrityloxy)butan-3-ol (170 mg, 0.27 mmol) was dried by coevaporation of dry acetonitrile and dissolved in 5 ml of dry dichloromethane. N, N-Diisopropylethylamine (0.14 ml, 0.8 mmol) was added and the mixture was purged with argon and cooled with an ice-water bath. O-2-Cyanoethyl-N,N-diisopropyl-chlorophosphoramidite (0.090 ml, 0.40 mmol) was added dropwise during 10 min with continuous stirring. After the addition of the chlorophosphine, the mixture was allowed to warm to room temperature and stirred for 1 hr. The reaction was stopped by addition of 0.5 ml of water and the mixture was concentrated to dryness. The residue was dissolved in CH₂Cl₂ containing 1% of triethylamine and washed with brine and dried. The resulting product was purified by chromatography on silica gel (hexane / ethyl acetate (3:1) + 1 % triethylamine) yielding 170 mg of the desired phosphoramidite (76%) as a foam. ¹H-NMR [CDCl₃, δ, ppm]: 7.8-7.2 (m, 17H, Ar Fluorenyl, DMT), 6.8 (dd, 4H, Ar DMT), 5.0 (d, 2H), 4.4 (m, 2H), 4.2 (m, 2H), 3.8 (m, 1H), 3.73 (s, 6H, OMe DMT), 3.4 (m, 2H), 3.2 (m, 2H), 2.55 (t, 2H), 1.24-0.95 (m, 15H, 5CH₃). ³¹P-NMR [CDCl₃, δ, ppm]: 148.87 and 148.63 (two diastereoisomers).

### Example 41. O-{2-N-(10H-indolo[3,2-d]quinoline-11-carbamoyl)-3-oxybut-1-yl} phosphate (3-1) O-{3-(5-methyl-5H-indolo[3,2-b]quinolin-11-ylamino-(S)-(2hydroxylprop-3-yl) (1-Qut-p-Cra-2).

(2S, 3R)-2-((9H-Fluoren-9-yl)methyloxycarbonyl)amino)butane-1-(4,4'-dimethoxytrityloxy)butan-3-yl N,N-diisopropylamino-2-cyanoethyl phosphoramidite (described in example 59) was reacted with a glass support loaded with (S)-3-(5-Methyl-5*H*-indolo[3,2*b*]quinolin-11-ylamino)-1-(4,4'-dimethoxytrityl)oxypropane-2-ol (compound **6b**, example 34, 0.5 µmol). The coupling was performed as described in example 27. After the coupling and oxidation, the support was treated with 20% piperidine in DMF for 5 min to remove the Fmoc group. Coupling of 10H-indolo[3,2-d]quinoline-11-carboxylic acid (compound **1a**) to the support was performed using 6.5 mg of compound 1 a (0.025 mmol), 13 mg of PyBOP (0.0025 mmol) and 0.0087 ml of diisopropylethylamine for 90 min at room temperature. Then the support was treated with 3% trichloroacetic acid in CH₂Cl₂ to remove the DMT group and finally the resulting support was treated with concentrated ammonia. After ammonia deprotection the desired compound was purified by HPLC. Retention time in HPLC (see conditions than in example 27) 14.4 min. MS (MALDI-TOF): found 733 [M+ H⁺], expected for C₃₉H₃₇N₆O₇P 732.7 Yield: 22%.

### Example 42. O-{-N-(10-indolo[3,2-d]quinoline-11-carbamoyl)-3-oxybut-1-yl} phosphate(3-1)O-{2-N-(10H-indolo[3,2-d]quinoline-11-carbamoyl)-3-oxybut-1-yl}phosphate(3-1)O-(2-N-{10H-indolo[3,2-d]quinoline-11-carbamoyl}-3-hydroxybut-1-yl) (1-Qut-p-Qut-p-Qut-3).

The trimer was prepared as described in example 38. Retention time in HPLC (see conditions in example 27) 15.3 min. MS (MALDI-TOF): found 1238 [M+3Na⁺], expected for C₆₀H₅₅N₉O₁₃P₂ 1172.0. Yield: 11 %.

### Example 43. O-{2-N-(Acridine-9-carbamoyl)-(1-hydroxybut-3-yl)} phosphate (3-1)O-{2-N-(acridine-9-carbamoyl)-(1-hydroxybut-3-yl)}phosphate(3-1)O-{2-N-(acridine-9-carbamoyl)-(3-hydroxybut-1-yl)}(1-Act-p-Act-p-Act-3).

The trimer was prepared as described in example 38. Retention time in HPLC (see conditions in example 27) 11.3 min. MS (MALDI-TOF): found 1077.1 [M+Na⁺], expected for C₅₄H₅₂N₆O₁₃P₂ 1154.9. Yield: 42%.

### Example 44. O-{2-N-(Acridine-9-carbamoyl)-(1-hydroxybut-3-yl)} phosphate (3-1)O-{2-N-(10H-indolo[3,2-d]quinoline-11-carbamoyl)-3-oxybut-1-yl} phosphate(3-1)O-{2-N-(acridine-9-carbamoyl)-(3-hydroxybut-1-yl)}(1-Act-p-Qut-p-Act-3).

The trimer was prepared as described in example 38. Retention time in HPLC (see conditions in example 27) 11.3 min. MS (MALDI-TOF): found 1093.9 [M+2H⁺], expected for C₅₆H₅₃N₇O₁₃P₂ 1093.9. Yield: 25%.

### Example 45. O-{2-N-(Acridine-9-carbamoyl)-(1-hydroxybut-3-yl)} phosphate (3-1) O-{2-N-(10H-indolo[3.2-d]quinoline-11-carbamoyl)-3-oxybut-1-yl} phosphate(3-1)O-{2-N-(5H-indolo[2,3-b]quinolin-5-yl)acetamido-3-hydroxybut-1-yl) (1-Act-p-Qut-p-Nct-3).

The trimer was prepared as described in example 38. Retention time in HPLC (see conditions in example 27) 16.8 min. MS (MALDI-TOF): found 1146 [M], expected for C₅₉H₅₅N₈O₁₃P₂ 1146.0. Yield: 12%.

### Example 46: Acetyl-{2-[Acridine-9-carbonyl)-aminol-acetyl}-(2-aminoethyl)-glycyl-{2-[Acridine-9-carbonyl)-amino]-acetyl}-(2-aminoethyl)- N-6-hydroxyhexyl glycynamide (Ac-Agp-Agp-NH-hexyl-OH).

Polyethylene-polystyrene support containing aminohexylsuccinil linker (50 mg, 7.5 µmol) was reacted triethylammonium [(2-[acridine-9-carbonyl)-amino]-acethyl)-(2-*tert*butoxycarbonylamino-ethyl)-amino]-acetate prepared as described above. For this purpose, triethylammonium [(2-[acridine-9-carbonyl)-amino]-acethyl)-(2-*tert*butoxycarbonylamino-ethyl)-amino]-acetate was dissolved in 150 µl of DMF, then diisopropylamine (19.6 µl, 0.11 mmols) was added and {O-(7-azabenzotriazol-1-yl]-1,1,3,3-tetramethyluronium hexafluorophosphate, HATU (12.8 mg, 0.033 mmols).The reaction mixture was left at room temperature for 1-2 min and the resulting solution was added to the support. Coupling reaction was maintained for 1 hour at room temperature. After this period the support was filtered and washed with DMF and DCM. Deprotection of the BOC group was done with a solution of 50% trifluoroacetic acid in dichloromethane and 5% cresol (20 min).
After the assembly of the dimer, the solid support was capped with acetic anhydride and N-diisopropylethylamine in DMF (1: 1.9 : 10) for 10 min at room temperature. Finally, the support was treated with 32% ammonia solution for 2 h at 55°C. The resulting solution was filtered and concentrated. HPLC analysis showed a major peak that had the expected molecular weight. MS (MALDI): found 884.4, expected 885.9 for C₄₈H₅₅N₉O₈.

### Example 47: Acetyl-{2-[Acridine-9-carbonyl)-amino]-acetyl}-(2-aminoethyl)-glycyl--{2-[Acridine-9-carbonyl)-amino]-acetyl}-(2-aminoethyl)-glycyl {2-[Acridine-9-carbonyl)-amino]-acetyl}-(2-aminoethyl)-N-6-hydroxyhexyl glycynamide (Ac-Agp-Agp-Agp-NH-hexyl-OH).

The oligomer was synthesized as described in example 54 but with an extra acridine monomer coupling. Acetylation also was performed in the same conditions as described above for the synthesis of the dimer. HPLC chromatogram reveals one major peak and two small secondary peaks. The major peak with tr=13.9 min had the expected mass. MS (MALDI): found 1246.4, expected 1249.3 for C₆₈H₇₄N₁₃O₁₁. One small secondary peaks was characterized as the corresponding acridine dimer (MS (MALDI): found 884.3, expected 885.9 for C₄₈H₅₅N₉O₈).

### Example 48: Acetyl-{2-N-(10H-indolo[3,2-d]quinoline-11-carbonyl)-amino]-acetyl}-(2-aminoethyl)-glycyl-{2-N-(10H-indolo[3,2-d]quinoline-11-carbonyl)-amino]-acetyl}-(2-aminoethyl)-N-6-hydroxyhexyl glycynamide (Ac-Qgp-Qgp-NH-hexyl-OH).

The oligomer was synthesized as described in example 54 but using triethylammonium [(2-*tert*butoxycarbonylamino-ethyl)-{2-[(10*H*-indolo[3,2-b]quinoline-11-carbonyl)-amino]-acetyl)-amino)-acetate as monomer, diisopropylcarbodiimide as coupling agent and 1-hydroxybenzotriazol as catalyst. Retention time in HPLC (see conditions in example 39) 16.2 min. MS (MALDI): found 962.6 [M], 984.6 [M+Na⁺], expected for C₅₂H₅₇N₁₁O₈ 964.0.

### Example 49: N-[2-(Acridine-9-carboxamide)]-4-N-[2-(acridine-9-carboxamide) prolinamide.

Boc-Amp(Fmoc)-OH (3 eq) was coupled to the MBHA resin using DIPCDI (3 eq) and HOBt (3 eq) as coupling reagents. Then Boc protecting group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and acridine-9-carboxylic acid (3 eq) was coupled to the resin using TBTU (3 eq) and DIEA (6 eq) for the coupling. The resin was then treated with 20% piperidine in DMF and the N-terminal and the second fluorophore (acridine-9-carboxylic acid (3 eq)) was introduced using the same coupling reagents described above. The final compound was cleaved with anhydrous HF at 0°C during 1 h using anisole as scavenger. Then the HF was evaporated and the oligomer precipitated with cold diethyl ether, filtered and extracted with AcOH:H₂O (90:10) and the solvent was evaporated. The crude was dissolved in H₂O/ACN and lyophilised. The desired product was characterized by UV-spectra and mass spectrometry. HPLC solutions were solvent A: H₂O containing 0.045% of TFA. Solvent B: acetonitrile containing 0.036% of TFA. Column: reverse-phase Symmetry C₁₈ (150 × 4.6mm) 5m, with UV detection at 220 nm. Flow rate 1 ml/min linear gradient from 0 to 50 in B. HPLC chromatogram shows the compound 78% pure at retention time of 8.3 min. MS (electrospray): found 598.33 [M+H⁺], expected for C₃₅H₂₈N₆O₄ 596.63.

### Example 50: N-[2-(Acridine-9-carboxamide)acetyl]-4-N-acetamidoprolinamide.

Boc-Amp(Fmoc)-OH (3 eq) was coupled to the MBHA resin using DIPCDI (3 eq) and HOBt (3 eq) as coupling reagents. Then Boc protecting group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and acridine-9-carboxylic acid (3 eq) was coupled to the resin using TBTU (3 eq) and DIEA (6 eq) for the coupling. The resin was then treated with 20% piperidine in DMF and the N-terminal was acetylated using Ac₂O-DIEA (5eq:5eq). The final compound was cleaved with anhydrous HF at 0 °C during 1 h using anisole as scavenger. Then the HF was evaporated and the oligomer precipitated with cold diethyl ether, filtered and extracted with AcOH:H₂O (90:10) and the solvent was evaporated. T he crude was dissolved in H₂O/ACN and lyophilised. The desired product was characterized by UV-spectra and mass spectrometry. Retention time and purity in the HPLC (see conditions in example 68): 6.7 min, 95%. MS (electrospray): found 434.24 [M+H⁺], expected for C₂₃H₂₃N₅O₄ 433.46.

### Example 51: N-{2-(10H-indolo[3,2-b]quinoline-11-carboxamide)acetyl}-4-N-acetamidoprolinamide.

This compound was synthesized as example **69**, changing the fluorophore for 10H-indolo[3,2-b]quinoline-11-carboxylic acid (3 eq). The desired product was characterized by UV-spectra and mass spectrometry. Retention time and purity in the HPLC (see conditions in example 68): 8.6 min, 96%. MS (electrospray): found 473.29 [M+H⁺], expected for C₂₅H₂₄N₆O₄ 472.50.

### Example 52: N⁴-Acetyl-4-amino-{2-(acridine-9-carboxamide)acetyl}prolinyl-4-amino-{2-(acridine-9-carboxamide)acetyl}prolinamide.

Boc-Amp(Fmoc)-OH (3 eq) was coupled to the MBHA resin using DIPCDI (3 eq) and HOBt (3 eq) as coupling reagents. The resin was then treated with 20% piperidine in DMF and the second molecule of Boc-Amp(Fmoc)-OH (3 eq) was coupled using the same coupling reagents. Then Boc protecting groups were removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and acridine-9-carboxylic acid (6 eq) was coupled to the resin using TBTU (6 eq) and DIEA (12 eq) for the coupling. The resin was then treated with 20% piperidine in DMF and the N-terminal was acetylated using A_{C2}O-DIEA (5eq:5eq). The final compound was cleaved with anhydrous HF at 0 °C during 1 h using anisole as scavenger. Then the HF was evaporated and the oligomer precipitated with cold diethyl ether, filtered and extracted with AcOH:H₂O (90:10) and the solvent was evaporated. T he crude was dissolved in H₂O/ACN and lyophilised. The desired product was characterized by UV-spectra and mass spectrometry. Retention time and purity in the HPLC (see conditions in example 68): 7.6 min, 75%. MS (electrospray): found 808.36 [M+H⁺], expected for C₄₄H₄₁N₉O₇ 807.85.

### Example 53: N⁴-Acetyl-4-amino-{2-(10H-indolo[3,2-b]quinoline-11-carboxamide)acetyl}prolinyl-4-amino-{2-(10H-indolo[3,2-b]quinoline-11-carboxamide)acetyl}prolinamide.

This compound was synthesized as example **71**, changing the fluorophore for 10H-indolo[3,2-b]quinoline-11-carboxylic acid (6 eq). The desired product was characterized by UV-spectra and mass spectrometry. Retention time and purity in the HPLC (see conditions in example 68): 9.5 min, 81 %. MS (electrospray): found 886.48 [M+H⁺], expected for C₄₈H₄₃N₁₁O₇ 885.92.

### Example 54: 10H-Indolo[3,2-b]quinoline-11-carboxylic acid {2-[4-acetylamino-2-(1-{2-[(acridine-9-carbonyl)-a mino]-acetyl}-5-carbamoyl-pyrrolidin-3-ylcarbamoyl)-pyrrolidin-1-yl]-2-oxoethyl}-amide.

Boc-Amp(Fmoc)-OH (3 eq) was coupled to the MBHA resin using DIPCDI (3 eq) and HOBt (3 eq) as coupling reagents. Then Boc protecting group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and acridine-9-carboxylic acid (3 eq) was coupled to the resin using TBTU (3 eq) and DIEA (3 eq). The resin was then treated with 20% piperidine in DMF and Boc-Amp(Fmoc)-OH (3 eq) was coupled using DIPCDI (3 eq) and HOBt (3 eq) as coupling reagents. Then Boc protecting group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and 10H-indolo[3,2-b]quinoline-11-carboxylic acid (3 eq) was coupled to the resin using TBTU (3 eq) and DIEA (6 eq). The resin was then treated with 20% piperidine in DMF and the N-terminal was acetylated using AC₂O-DIEA (5eq:5eq). The final compound was cleaved with anhydrous HF at 0 °C during 1h using anisole as scavenger. Then the HF was evaporated and the oligomer precipitated with cold diethyl ether, filtered and extracted with AcOH:H₂O (90:10) and the solvent was evaporated. T he crude was dissolved in H₂O/ACN and lyophilised. The desired product was characterized by UV-spectra and mass spectrometry. Retention time and purity in the HPLC (see conditions in example 68): 8.5 min, 86%. MS (electrospray): found 847.30 [M+H⁺], expected for C₄₆H₄₂N₁₀O₇ 846,89.

### Example 55: 10H-Indolo[3,2-b]quinoline-11-carboxylic acid (2-{4-[(4-acetylamino-1-{2-[(acridine-9-carbonyl)-amino]-acetyl}-pyrrolidine-2-carbonyl)-amino]-2-carbamoyl-pyrrolidin-1-yl}-2-oxo-ethyl)-amide.

This compound was synthesized following the same protocol described for example **73**, but replacing the first fluorophore for 10H-indolo[3,2-b]quinoline-11-carboxylic acid (3 eq) and the second one for acridine-9-carboxylic acid (3 eq). The desired product was characterized by UV-spectra and mass spectrometry. Retention time and purity in the HPLC (see conditions in example 68): 8.7 min, 88%. MS (electrospray): found 847.36 [M+H⁺], expected for C₄₆H₄₂N₁₀O₇ 846,89.

### Example 56: N⁴ -Acetyl-4-amino-{2-(acridine-9-carboxamide)acetyl}prolinyl-4-amino-{2-(acridine-9-carboxamide)acetyl}prolinyl-4-amino-{2-(acridine-9-carboxamide)acetyl}prolinamide.

Boc-Amp(Fmoc)-OH (3 eq) was coupled to the MBHA resin using DIPCDI (3 eq) and HOBt (3 eq) as coupling reagents. The resin was then treated with 20% piperidine in DMF and the second molecule of Boc-Amp(Fmoc)-OH (3 eq) was coupled using the same coupling reagents. The resin was treated again with 20% piperidine in DMF and the third Boc-Amp(Fmoc)-OH (3 eq) was coupled using the same coupling reagents. Then Boc protecting groups were removed with 40% TFA in DCM, the resin was treated with 5% DIEA in DCM and the spacer (Boc-Gly-OH, 15 eq) was introduced at this α-amino position using DIPCDI (15 eq) and HOBt (15 eq) as coupling reagents. After that, Boc group was removed and acridine-9-carboxylic acid (9 eq) was coupled to the resin using TBTU (9 eq) and DIEA (18 eq) for the coupling. The resin was then treated with 20% piperidine in DMF and the N-terminal was acetylated using Ac₂O-DIEA (5eq:5eq). The final compound was cleaved with anhydrous HF at 0 °C during 1 h using anisole as scavenger. Then the HF was evaporated and the oligomer precipitated with cold diethyl ether, filtered and extracted with AcOH:H₂O (90:10) and the solvent was evaporated. The crude was dissolved in H₂O/ACN and lyophilised. The desired product was characterized by UV-spectra and mass spectrometry. Retention time and purity in the HPLC (see conditions in example 68): 8.1 min, 56%. MS (electrospray): found 1182.65 [M+H⁺], expected for C₆₅H₅₉N₁₃O₁₀ 1182.25.

### Example 57: N⁴-Acetyl-4-amino-{2-(10H-indolo[3,2-b]quinoline-11-carboxamide)acetyl}prolinyl-4-amino-{2-(10H-indolo[3,2-b]quinoline-11-carboxamide)acetyl}prolinyl-{2-(10H-indolo[3,2-b]quinoline-11-carboxamide)acetyl}prolinamide.

This compound was synthesized following the same protocol described for example 56, but replacing the fluorophore for 10H-indolo[3,2-b]quinoline-11-carboxylic acid (9 eq). The desired product was characterized by UV-spectra and mass spectrometry. Retention time and purity in the HPLC (see conditions in example 68): 10.1 min, 87%. MS (electrospray): found 1299.66 [M+H⁺], expected for C₇₁H₆₂N₁₆O₁₀ 1299.35.

### Example 58: : N⁴-Acetyl-4-amino-{2-(acridine-9-carboxamide)acetyl}prolinyl-4-amino-{2-(10H-indolo[3,2-b]quinoline-11-carboxamide)acetyl}proliny-4-amino-{2-(acridine-9-carboxamide)acetyl}prolinamide(Ac-Agr-Qgr-Agr-NH₂).

Boc-Amp(Fmoc)-OH (3 eq) was coupled to the MBHA resin using DIPCDI (3 eq) and HOBt (3 eq) as coupling reagents. Then Boc protecting group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and the first fluorophore (acridine-9-carboxylic acid (3 eq)) was coupled to the resin using TBTU (3 eq) and DIEA (6 eq). The resin was then treated with 20% piperidine in DMF and Boc-Amp(Fmoc)-OH (3 eq) was coupled using DIPCDI (3 eq) and HOBt (3 eq) as coupling reagents. Then Boc protecting group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and the second fluorophore (10H-indolo[3,2-b]quinoline-11-carboxylic acid (3 eq)) was coupled to the resin using TBTU (3 eq) and DIEA (6 eq). The resin was then treated with 20% piperidine in DMF and Boc-Amp(Fmoc)-OH (3 eq) was coupled using DIPCDI (3 eq) and HOBt (3 eq) as coupling reagents. Then Boc protecting group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and the third fluorophore (acridine-9-carboxylic acid (3 eq)) was coupled to the resin using TBTU (3 eq) and DIEA (6 eq). The resin was then treated with 20% piperidine in DMF and the N-terminal was acetylated using Ac₂O-DIEA (5eq:5eq). The final compound was cleaved with anhydrous HF at 0 °C during 1 h using anisole as scavenger. Then the HF was evaporated and the oligomer precipitated with cold diethyl ether, filtered and extracted with AcOH:H₂O (90:10) and the solvent was evaporated. T he crude was dissolved in H₂O/ACN and lyophilised. The desired product was characterized by UV-spectra and mass spectrometry. Retention time and purity in the HPLC (see conditions in example 68): 8.5 min, 75%. MS (electrospray): found 1222,56 [M+H⁺], expected for C₆₇H₆₀N₁₄O₁₀ 1221,28.

### Example 59: N⁴-Acetyl-4-amino-{2-(10H-indolo[3,2-b]quinoline-11-carboxamide)acetyl}prolinyl-4-amino-{2-(10H-indolo[3,2-b]quinoline-11-carboxamide)acetyl}prolinyl-4-amino-{2-(acridine-9-carboxamide)acetyl}prolinamide (Ac-Qgr-Qgr-Agr-NH₂).

This compound was synthesized following the same protocol described for example 58, but replacing the third fluorophore for 10H-indolo[3,2-b]quinoline-11-carboxylic acid (3 eq). The desired product was characterized by UV-spectra and mass spectrometry. Retention time and purity in the HPLC (see conditions in example 68): 9.3 min, 71%. MS (electrospray): found 1182.65 [M+H⁺], expected for, C₆₉H₆₁N₁₅O₁₀ 1260,32.

### Example 60: N⁴-Acetyl-4-amino-{2-(10H-indolo[3,2-b]quinoline-11-carboxamide)acetyl}prolinyl-4-amino-{2-(acridine-9-carboxamide)acetyl}prolinyl-4-amino-{2-(acridine-9-carboxamide)acetyl}prolinamide (Ac-Qgr-Agr-Agr-NH₂).

This compound was synthesized following the same protocol described for example **58**, but replacing the second fluorophore for acridine-9-carboxylic acid (3 eq) and the third one for 10H-indolo[3,2-b]quinoline-11-carboxylic acid (3 eq). The desired product was characterized by UV-spectra and mass spectrometry. Retention time and purity in the HPLC (see conditions in example 68): 8.8 min, 57%. MS (electrospray): found 1222.61 [M+H⁺], expected for C₆₇H₆₀N₁₄O₁₀ 1221,28.

### Example 61: N⁴-Acetyl-4-amino-{2-(10H-indolo[3,2-b]quinoline-11-carboxamide)acetyl}prolinyl-4-amino-{2-(acridine-9-carboxamide)acetyl}prolinyl-4-amino-{2-(10H-indolo[3,2-b]quinoline-11-carboxamide)acetyl}prolinamide (Ac-Qgr-Agr-Qgr-NH₂).

This compound was synthesized following the same protocol described for example **58**, but replacing the first fluorophore for 10H-indolo[3,2-b]quinoline-11-carboxylic acid (3 eq), the second one for acridine-9-carboxylic acid (3 eq) and the third one for 10H-indolo[3,2-b]quinoline-11-carboxylic acid (3 eq). The desired product was characterized by UV-spectra and mass spectrometry. Retention time and purity in the HPLC (see conditions in example 68): 9.8 min, 84%. MS (electrospray): found 1261.63 [M+H⁺], expected for C₆₉H₆₁N₁₅O₁₀ 1260,32.

### Example 62: N⁴-Acetyl-4-amino-{2-(acridine-9-carboxamide)acetyl}prolinyl-4-amino-{2-(acridine-9-carboxamide)acetyl}prolinyl-4-amino-{2-(10H-indolo[3,2-b]quinoline-11-carboxamide)acetyl}prolinamide (Ac-Agr-Agr-Qgr-NH₂).

This compound was synthesized following the same protocol described for example **58**, but replacing the first fluorophore for 10H-indolo[3,2-b]quinoline-11-carboxylic acid (3 eq) and the second one for acridine-9-carboxylic acid (3 eq). The desired product was characterized by UV-spectra and mass spectrometry. Retention time and purity in the HPLC (see conditions in example 68): 9.5 min, 79%. MS (electrospray): found 1221.69 [M+H⁺], expected for C₆₇H₆₀N₁₄O₁₀ 1221,28.

### Example 63: N⁴-Acetyl-4-amino-{2-(acridine-9-carboxamide)acetyl}prolinyl-4-amino-{2-(10H-indolo[3,2-b]quinoline-11-carboxamide)acetyl}proliny-4-amino-{2-(10H-indolo[3,2-b]quinoline-11-carboxamide)acetyl}prolinamide (Ac-Agr-Qgr-Qgr-NH₂).

This compound was synthesized following the same protocol described for example **58**, but replacing the first fluorophore for 10H-indolo[3,2-b]quinoline-11-carboxylic acid (3 eq). The desired product was characterized by UV-spectra and mass spectrometry. Retention time and purity in the HPLC (see conditions in example 68): 8.9 min, 62%. MS (electrospray): found 1260.63 [M+H⁺], expected for C₆₉H₆₁N₁₅O₁₀ 1260,32.

### Example 64: N⁴-Acetyl-4-amino-{2-(10H-indolo[3,2-b]quinoline-11-carboxamide)acetyl}prolinyl-4-aminoprolinyl-4-amino-{2-(acridine-9-carboxamide)acetyl}prolinyl-4-aminoprolinyl-4-amino-[(2-phenyl-quinoline-4-carboxamide)acetyl]prolinamide (Ac-Qgr-r-Agr-r-Pgr-NH₂).

Boc-Amp(Fmoc)-OH (3 eq) was coupled to the MBHA resin using DIPCDI (3 eq) and HOBt (3 eq) as coupling reagents. Then Boc protecting group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and the first fluorophore (2-phenyl-quinoline-4-carboxylic acid (3 eq)) was coupled to the resin using TBTU (3 eq) and DIEA (6 eq). The resin was then treated with 20% piperidine in DMF and Boc-Amp(Fmoc)-OH (3 eq) was coupled using DIPCDI (3 eq) and HOBt (3 eq) as coupling reagents. Then Boc protecting group was removed with 40% TFA in DCM, the resin was treated with 5% DIEA in DCM and acetylated with Ac₂O (10 eq) and DIEA (10 eq). The resin was then treated with 20% piperidine in DMF and Boc-Amp(Fmoc)-OH (3 eq) was coupled using DIPCDI (3 eq) and HOBt (3 eq). Then the Boc group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and the second fluorophore (acridine-9-carboxylic acid, 3eq)) was coupled to the resin using TBTU (3 eq) and DIEA (6 eq). The resin was then treated with 20% piperidine in DMF and Boc-Amp(Fmoc)-OH (3 eq) was coupled using DIPCDI (3 eq) and HOBt (3 eq) as coupling reagents. Then Boc protecting group was removed with 40% TFA in DCM, the resin was treated with 5% DIEA in DCM and acetylated with Ac₂O (10 eq) and DIEA (10 eq). The resin was then treated with 20% piperidine in DMF and Boc-Amp(Fmoc)-OH (3 eq) was coupled using DIPCDI (3 eq) and HOBt (3 eq). Then the Boc group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and the third fluorophore (10H-Indolo[3,2-b]quinoline-11-carboxylic acid, (3 eq)) was coupled to the resin using TBTU (3 eq) and DIEA (6 eq). Finally, the resin was treated with 20% piperidine in DMF and the N-terminal was acetylated using Ac₂O-DIEA (5eq:5eq). The final compound was cleaved with anhydrous HF at 0 °C during 1 h using anisole as scavenger. Then the HF was evaporated and the oligomer precipitated with cold diethyl ether, filtered and extracted with AcOH:H₂O (90:10) and the solvent was evaporated. T he crude was dissolved in H₂O/ACN and lyophilised. The desired product was characterized by UV-spectra and mass spectrometry. HPLC solutions were solvent A: H₂O containing 0.045% of TFA. Solvent B: acetonitrile containing 0.036% of TFA. Column: reverse-phase Symmetry C₁₈ (150 × 4.6 mm) 5 m, with UV detection at 220 nm. Flow rate 1 ml/min linear gradient from 0 to 100 in B. Retention time and purity in the HPLC: 5.2 min, 82%. MS (electrospray): found 1557.64 [M+H⁺], expected for C₈₄H₈₄N₁₈O₁₄ 1555,65.

### Example 65: N⁴-Acetyl-4-amino-{2-(acridine-9-carboxamide)acetyl}prolinyl-4-aminoprolinyl-4-amino-[(2-phenyl-quinoline-4-carboxamide)acetyl]prolinamide-4-aminoprolinyl-4-amino-{2-(10H-indolo[3,2-b]quinoline-11-carboxamide)acetyl}prolinamide (Ac-Agr-r-Pgr-r-Qgr-NH₂).

This compound was synthesized following the same protocol described for example **64**, but replacing the first fluorophore by 10H-indolo[3,2-b]quinoline-11-carboxylic acid (3 eq), the second one by 2-phenyl-quinoline-4-carboxylic acid (3 eq) and the third one by acridine-9-carboxylic acid (3 eq). The desired product was characterized by UV-spectra and mass spectrometry. Retention time and purity in the HPLC (see conditions in example 83): 5.2 min, 96%. MS (electrospray): found 1557.14 [M+H⁺], expected for C₈₃H₈₂N₁₈O₁₄ 1555,65.

### Example 66: N⁴-Acetyl-4-amino-{2-(10H-indolo[3,2-b]quinoline-11-carboxamide)acetyl}prolinyl-4-aminoprolinyl-4-aminoprolinyl-4-amino-{2-(acridine-9-carboxamide)acetyl}prolinyl-4-aminoprolinyl-4-aminoprolinyl-4-amino-[(2-phenyl-quinoline-4-carboxamide)acetyl]prolinamide (Ac-Qgr-r-r-Agr-r-r-Pgr-NH₂)

Boc-Amp(Fmoc)-OH (3 eq) was coupled to the MBHA resin using DIPCDI (3 eq) and HOBt (3 eq) as coupling reagents. Then Boc protecting group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and the first fluorophore (2-phenyl-quinoline-4-carboxylic acid (3 eq)) was coupled to the resin using TBTU (3 eq) and DIEA (6 eq). The resin was then treated with 20% piperidine in DMF and Boc-Amp(Fmoc)-OH (3 eq) was coupled using DIPCDI (3 eq) and HOBt (3 eq) as coupling reagents. The resin was treated again with 20% piperidine in DMF and Boc-Amp(Fmoc)-OH (3 eq) was coupled using DIPCDI (3 eq) and HOBt (3 eq) as coupling reagents. Then Boc protecting groups were removed with 40% TFA in DCM, the resin was treated with 5% DIEA in DCM and acetylated with AC₂O (10 eq) and DIEA (10 eq). The resin was then treated with 20% piperidine in DMF and Boc-Amp(Fmoc)-OH (3 eq) was coupled using DIPCDI (3 eq) and HOBt (3 eq). Then the Boc group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and the second fluorophore (acridine-9-carboxylic acid, 3eq)) was coupled to the resin using TBTU (3 eq) and DIEA (6 eq). The resin was then treated with 20% piperidine in DMF and Boc-Amp(Fmoc)-OH (3 eq) was coupled using DIPCDI (3 eq) and HOBt (3 eq) as coupling reagents. The resin was treated again with 20% piperidine in DMF and Boc-Amp(Fmoc)-OH (3 eq) was coupled using DIPCDI (3 eq) and HOBt (3 eq) as coupling reagents. Then Boc protecting groups were removed with 40% TFA in DCM, the resin was treated with 5% DIEA in DCM and acetylated with Ac₂O (10 eq) and DIEA (10 eq). The resin was then treated with 20% piperidine in DMF and Boc-Amp(Fmoc)-OH (3 eq) was coupled using DIPCDI (3 eq) and HOBt (3 eq). Then the Boc group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and the third fluorophore (10H-indolo[3,2-b]quinoline-11-carboxylic acid, (3 eq)) was coupled to the resin using TBTU (3 eq) and DIEA (6 eq). Finally, the resin was treated with 20% piperidine in DMF and the N-terminal was acetylated using Ac₂O-DIEA (5eq:5eq). The final compound was cleaved with anhydrous HF at 0 °C during 1h using anisole as scavenger. Then the HF was evaporated and the oligomer precipitated with cold diethyl ether, filtered and extracted with AcOH:H₂O (90:10) and the solvent was evaporated. T he crude was dissolved in H₂O/ACN and lyophilised. The desired product was characterized by UV-spectra and mass spectrometry. Retention time and purity in the HPLC (see conditions in example 83): 5.1 min, 96%. MS (electrospray): found 1865.85 [M+H⁺], expected for C₉₇H₁₀₂N₂₂O₁₈ 1863,98.

### Example 67: N⁴-Acetyl-4-amino-{2-(acridine-9-carboxamide)acetyl}prolinyl-4-aminoprolinyl-4-aminoprolinyl-4-amino-[(2-phenyl-quinoline-4-carboxamide)acetyl]prolinamide-4-aminoprolinyl-4-aminoprolinyl-4-amino-{2-(10H-indolo[3,2-b]quinoline-11-carboxamide)acetyl}prolinamide (Ac-Agr-r-r-Pgr-r-r-Qgr-NH₂).

This compound was synthesized following the same protocol described for example 66, but replacing the first fluorophore by 10H-indolo[3,2-b]quinoline-11-carboxylic acid (3 eq), the second one by 2-phenyl-quinoline-4-carboxylic acid (3 eq) and the third one by acridine-9-carboxylic acid (3 eq). The desired product was characterized by UV-spectra and mass spectrometry. Retention time and purity in the HPLC (see conditions in example 83): 5.2 min, 99%. MS (electrospray): found 1865.17 [M+H⁺], expected for C₉₇H₁₀₂N₂₂O₁₈ 1863,98.

### Example 68: N⁴-Acetyl-5-N-{2-(acridine-9-carboxamide)acetyl}ornithinyl-5-N-{2-(acridine-9-carboxamide)acetyl}ornithinyl-5-N-{2-(acridine-9-carboxamide)acetyl)ornithinamide (Ac-Ago-Ago-Ago-NH₂).

Boc-Orn(Fmoc)-OH (3 eq) was coupled to the MBHA resin using DIPCDI (3 eq) and HOBt (3 eq) as coupling reagents. The resin was then treated with 20% piperidine in DMF and the second molecule of Boc-Orn(Fmoc)-OH (3 eq) was coupled using the same coupling reagents. The resin was treated again with 20% piperidine in DMF and the third Boc-Orn(Fmoc)-OH (3 eq) was coupled using the same coupling reagents. Then Boc protecting groups were removed with 40% TFA in DCM, the resin was treated with 5% DIEA in DCM and the spacer (Boc-Gly-OH, 15 eq) was introduced at this α-amino position using DIPCDI (15 eq) and HOBt (15 eq) as coupling reagents. After that, Boc group was removed and acridine-9-carboxylic acid (9 eq) was coupled to the resin using TBTU (9 eq) and DIEA (18 eq) for the coupling. The resin was then treated with 20% piperidine in DMF and the N-terminal was acetylated using Ac₂O-DIEA (5eq:5eq). The final compound was cleaved with anhydrous HF at 0 °C during 1 h using anisole as scavenger. Then the HF was evaporated and the oligomer precipitated with cold diethyl ether, filtered and extracted with AcOH:H₂O (90:10) and the solvent was evaporated. T he crude was dissolved in H₂O/ACN and lyophilised. The desired product was characterized by UV-spectra and mass spectrometry. Retention time and purity in the HPLC (see conditions in example 83): 4.3 min, 91 %. MS (electrospray): found 1189.00 [M+H⁺], expected for C₆₅H₆₅N₁₃O₁₀ 1188,29.

### Example 69: N⁴-Acetyl-5-N-{2-(acridine-9-carboxamide)acety}nornithinyl-5-N-{2-(10H-indolo[3,2-b]quinoline-11-carboxamide)acetyl}ornithinyl-5-N-{2-(acridine-9-carboxamide)acetyl}ornithinamide (Ac-Ago-Qgo-Ago-NH₂).

Boc-Orn(Fmoc)-OH (3 eq) was coupled to the MBHA resin using DIPCDI (3 eq) and HOBt (3 eq) as coupling reagents. Then Boc protecting group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and the first fluorophore (acridine-9-carboxylic acid (3 eq)) was coupled to the resin using TBTU (3 eq) and DIEA (6 eq). The resin was then treated with 20% piperidine in DMF and Boc-Orn(Fmoc)-OH (3 eq) was coupled using DIPCDI (3 eq) and HOBt (3 eq) as coupling reagents. Then Boc protecting group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and the second fluorophore (10H-indolo[3,2-b]quinoline-11-carboxylic acid (3 eq)) was coupled to the resin using TBTU (3 eq) and DIEA (6 eq). The resin was then treated with 20% piperidine in DMF and Boc-Orn(Fmoc)-OH (3 eq) was coupled using DIPCDI (3 eq) and HOBt (3 eq) as coupling reagents. Then Boc protecting group was removed with 40% TFA in DCM, the resin was treated with 5% DIEA in DCM and the spacer (Boc-Gly-OH, 5 eq) was introduced at this α-amino position using DIPCDI (5 eq) and HOBt (5 eq) as coupling reagents. After that, Boc group was removed and the third fluorophore (acridine-9-carboxylic acid (3 eq)) was coupled to the resin using TBTU (3 eq) and DIEA (6 eq). The resin was then treated with 20% piperidine in DMF and the N-terminal was acetylated using Ac₂O-DIEA (5eq:5eq). The final compound was cleaved with anhydrous HF at 0 °C during 1 h using anisole as scavenger. Then the HF was evaporated and the oligomer precipitated with cold diethyl ether, filtered and extracted with AcOH:H₂O (90:10) and the solvent was evaporated. The crude was dissolved in H₂O/ACN and lyophilised. The desired product was characterized by UV-spectra and mass spectrometry. Retention time and purity in the HPLC (see conditions in example 83): 4.6 min, 95%. MS (electrospray): found 1227.90 [M+H⁺], expected for C₆₇H₆₆N₁₄O₁₀ 1227,33.

### Example 70: N⁴-Acetyl-5-N-{2-(acridine-9-carboxamide)acetyl}ornithinyl-5-N-{2-(10H-indolo[3,2-b]quinoline-11-carboxamide)acetyl}ornithinyl-5-N-{2-(10H-indolo[3,2-b]quinoline-11-carboxamide)acetyl}ornithinamide (Ac-Ago-Qgo-Qgo-NH₂).

This compound was synthesized following the same protocol described for example **69**, but replacing the first fluorophore by 10H-indolo[3,2-b]quinoline-11-carboxylic acid (3 eq). The desired product was characterized by UV-spectra and mass spectrometry. Retention time and purity in the HPLC (see conditions in example 83): 4.8 min, 92%. MS (electrospray): found 643.30 [(M+2H)/2²⁺], expected for C₆₉H₆₇N₁₅O₁₀ 1227,33.

### Example 71: N⁴-Acetyl-5-N-{2-(10H-indolo[3,2-b]quinoline-11-carboxamide)acetyl}ornithinyl-5-N-{2-(10H-indolo[3,2-b]quinoline-11-carboxamide)acetyl}ornithinyl-5-N-{2-(10H-indolo[3,2-b]quinoline-11-carboxamide)acetyl}ornithinamide Ac-Qgo-Qgo-Qgo-NH₂

This compound was synthesized following the same protocol described for example **68**, but replacing the fluorophore by 10H-indolo[3,2-b]quinoline-11-carboxylic acid (3 eq). The desired product was characterized by UV-spectra and mass spectrometry. Retention time and purity in the HPLC (see conditions in example 83): 5.0 min, 84%. MS (electrospray): found 1305.90 [M+H⁺], expected for C₇₁H₆₈N₁₆O₁₀ 1305,40.

### Fluorescent properties of the new compounds.

The excitation and emission wavelenghts of the new compounds are described in Table 1. Optimal excitation wavelenghts range from 247 to 433 nm and the corresponding emission wavelenghts range from 392 to 505 nm. The quindoline derivatives with aminoproline backbone have the higher emission wavelengths. The phenylquinoline derivatives have the lower emission wavelengths.

**Table 1. UV and Fluorescence properties of the new compounds.**

| Compound | UV(λ, max) | Fluorescence Excitation (nm) | Fluorescence emission (nm) |
|---|---|---|---|
| 2a, Qut, Ex. 3 | 276, 306, 347, 400 | 346 | 402 |
| 2b, Act. Ex, 4 | 249, 343, 359, 385 | 358 | 439 |
| 2c, Qgt. Ex. 5 | 275, 303, 347, 401 | 374 | 446 |
| 2d, Agt, Ex. 6 | 250, 342, 359, 385 | 247 | 440 |
| 2e, Pht, Ex. 13 | 260, 328 | 326 | 377 |
| 2f, Nct, Ex. 16 | 272, 331, 351 | 261 | 456 |
| 5a, Aca, Ex. 18 | 264, 392, 410, 433 | 433 | 448, 470 |
| 5b, Cra, Ex. 21 | 281, 329, 409, 426 | 340 | 469 |
| Ex 27, Act-p-Qut | 252, 277, 349 | 358 | 438 |
| Ex 28, Qut-p-Qut | 272, 346, 396 | 346 | 495 |
| Ex 29, Act-p-Qut-p-Qut | 251, 274, 349 | 353 | 440 |
| Ex 30, Act-(p-Act)₅ | 247, 363 | 350 | 438 |
| Ex 31, Act-p-Cra | 252, 283, 342, 429 | 353 | 441 |
| Ex 32, Act-ps-Cra | 252, 283, 342, 395, 429 | 359 | 448 |
| Ex 33, Aca-p-Aca | 265, 412, 434 | 359 | 440 |
| Ex 34, Pht-p-Act | 252, 330 | 252 | 437 |
| Ex 35, Pht-p-Pht | 260, 330 | 330 | 395 |
| Ex 36, Act-p-Pht | 252, 339, 362 | 252 | 403 |
| Ex 37, Pht-p-Qut | 265, 337, 404 | 342 | 492 |
| Ex 38, Act-p-Qut-p-Agt | 248, 280, 360 | 359 | 438 |
| Ex 41, Qut-p-Cra | 276, 343, 407 | 275 | 476 |
| Ex 42, Qut-p-Qut-p-Qut | 273, 349, 399 | 359 | 499 |
| Ex 43, Act-p-Act-p-Act | 246, 361 | 360 | 440 |
| Ex 44, Act-p-Qut-p-Act | 252, 281, 360 | 359 | 438 |
| Ex 45, Act-p-Qut-p-Nct | 253, 272, 335 | 271 | 449 |
| Ex 46, Agp-Agp | 252, 360 | 248 | 441 |
| Ex 47, Agp-Agp-Agp | 252,360 | 360 | 436 |
| Ex 48, Qgp-Qgp | 275, 350 | 349 | 495 |
| Ex 50, Agr | 252, 360 | 282 | 439 |
| Ex 51, Qgr | 224, 276, 348, 401 | 347 | 502 |
| Ex 52, Agr-Agr | 251, 361 | 274 | 450 |
| Ex 53, Qgr-Qgr | 223, 276, 349 | 348 | 396, 504 |
| Ex 54, Agr-Qgn | 223, 252, 276, 349 | 273 | 498 |
| Ex 55, Qgr-Agr | 252, 277, 350 | 308 | 500 |
| Ex 56, Agr-Agr-Agr | 245, 361 | 275 | 440 |
| Ex 57, Qgr-Qgr-Qgr | 224, 275, 349 | 348 | 505 |
| Ex 58, Agr-Qgr-Agr | 252, 279, 353 | 275 | 503 |
| Ex 60, Qgr-Agr-Agr | 250, 278, 360 | 309 | 456 |
| Ex 61, Qgr-Agr-Qgr | 223, 253, 277, 350 | 348 | 488 |
| Ex 63, Agr-Qgr-Qgr | 253, 275, 352 | 272 | 503 |
| Ex 64, Qgr-Agr-Pgr | 253, 346 | 347 | 488 |
| Ex 65, Agr-r-Pgr-r-Qgr | 252, 342 | 249 | 442 |
| Ex 66, Qgr-r-r-Agr-r-r-Pgr | 253, 338 | 269 | 432 |
| Ex 67, Agr-r-r-Pgr-r-r-Qgr | 252, 301, 341, 360 | 265 | 451 |
| Ex 68, Ago-Ago-Ago | 252,361 | 360 | 435 |
| Ex 69, Ago-Qgo-Ago | 252, 280, 359 | 357 | 441 |
| Ex 70, Ago-Qgo-Qgo | 225, 252, 275, 351 | 248 | 446 |
| Ex 71, Qgo-Qgo-Qgo | 275, 351 | 338 | 466 |

### DNA-Duplex stabilization properties

Solid supports carrying oligomers with L-threoninol and 3-aminopropan-1,2-diol backbones were introduced on a DNA synthesizer and oligonucleotides were assembled using standard protocols. After the assembly of the desired DNA sequence, supports were treated with concentrated ammonia at 55°C for a minimum of 6 hrs yielding oligonucleotides carrying oligomers of fluorophores at the 3'-end.

Two oligonucleotide sequences were synthetized (sequence 1: 5'-TTCCGGAA-3' sequence 2: 5'-CCAATTGG-3') carrying different fluorophores at the 3'-end. Solid supports containing dimer and trimer fluorophores (prepared in examples 28-31) and standard protocols for oligonucleotide synthesis were used in order to obtain these modified oligonucleotides (Table 2). Ammonia deprotection was performed at 55°C for 6 hours. The resulting solutions were concentrated to dryness. Then, the residue was dissolved in water and desalted through a NAP-10 column. Fractions containing oligonucleotides were analysed by HPLC and characterized by UV and MS spectrometry.

**Table 2**

| |
|---|
| TTCCGGAA-p-Qut, found: 2819.2; expected for C₉₈H₁₁₇N₃₃O₅₁P₈ 2820.6 |
| TTCCGGAA-p-Agt (**1d**), found: 2837.1; expected for C₉₈H₁₁₉N₃₃O₅₂P₈ 2838.6 |
| CCAATTGG-p-Act (**1b**), found: 2779.9; expected for C₉₆H₁₁₆N₃₂O₅₁P₈ 2781.6 |
| TTCCGGAA-p-Cra, found: 2789.7; expected for C₉₇H₁₁₅N₃₃O₅₀P₈ 2790.6 |
| CCAATTGG-p-Cra, found: 2790.4; expected for C₉₇H₁₁₅N₃₃O₅₀P₈ 2790.6 |
| CCAATTGG-p-Qut, found: 2817.8; expected for C₉₈H₁₁₇N₃₃O₅₁P₈ 2820.6 |
| CCAATTGG-Agt (**1d**), found 2836.1; expected for C₉₈H1₁₁₉N₃₃O₅₂P₈ 2838.6 |
| CCAATTGG-p-Act-p-Qut-p-Qut, found 3601.4; C₁₃₆H₁₅₂N₃₈O₆₁P₁₀ 3604.3 |
| TTCCGGAA-p-Qut-p-Qut, found 3228.0; C₁₁₈H₁₃₆N₃₆O₅₆P₉ 3232.9 |
| TTCCGGAA-p-Pht, found 2807.0; C₉₈H₁₁₈N₃₂O₅₁P₈ 2807.6 |
| TTCCGGAA-p-Act-p-Pht, found 3178.2; C₁₁₆H₁₃₅N₃₄O₅₆P₉ 3179.9 |
| TTCCGGAA-p-Nct, found 2834.9; C₁₀₀H₁₁₈N₃₃O₅₁P₈ 2845.7 |
| TTCCGGAA-p-Qgt, found 2778.0; C₁₀₀H₁₂₀N₃₄O₅₂P₈ 2877.7 |
| TTCCGGAA-p-Act-p-Qut-p-Nct, found 3616.4; C₁₃₈H₁₃₄N₃₈O₆₁P₁₀ 3610.14 |
| TTCCGGAA-p-Act-p-Qut, found 3191.3 (M+ Na⁺), C₁₁₆H₁₁₄N₃₅O₅₆P₉ 3172.8 |

Next, the fluorescent properties of duplexes carrying fluorophores at the 3'-end was determined and the results are shown in Table 3:

**Table 2**

| Sequence (5'-3') | Excitation (nm) | Emission (nm) |
|---|---|---|
| TTCCGGAA-p-Qut (1 a) | 349 | 492 |
| TTCCGGAA-p-Act-p-Qut-p-Qut | 352 | 436 |
| TTCCGGAA-p-Act-p-Qut | 351 | 485 |
| TTCCGGAA-p-Qut-p-Qut | 349 | 490 |
| TTCCGGAA-p-Act-p-Pht | 336 | 440 |
| TTCCGGAA-p-Nct | 267 | 442 |
| TTCCGGAA-p-Qgt | 350 | 491 |
| CCAATTGG- p-Agt (1 d) | 350 | 438 |
| CCAATTGG- p-Qut (1 a) | 273 | 493 |
| CCAATTGG -p-Act-p-Qut-p-Qut | 248 | 440 |
| CCAATTGG- p-Qut-p-Qut | 359 | 496 |

As it is derived from the obtained data, when linked to oligonucleotides the fluorescent properties are preserved.

### Melting experiments

Appropriate oligonucleotides were dissolved in a solution containing 1 M NaCl, 10 mM sodium phosphate buffer of pH=7. UV Absorption spectra and melting experiments (absorbance vs temperature) were recorded in 1-cm path length cell by using a spectrophotometer, with a temperature controller and a programmed temperature increase rate of 1°C/min. Melting curves were recorded at 260 nm, and melting temperatures were measured at the maximum of the first derivatives of the melting curves. Results are shown in Table 4.

**Table 4**

| Sequence (5'-3') | Tm(°C) | ΔTm (°C) |
|---|---|---|
| TTCCGGAA | 35 | -- |
| TTCCGGAA-p-Act (1b) | 47 | +12 |
| TTCCGGAA-p-Agt (1d) | 47 | +12 |
| TTCCGGAA-p-Qut (1a) | 44 | +9 |
| TTCCGGAA-p-Act-p-Qut-p-Qut | 44 | +9 |
| TTCCGGAA-p-Act-p-Qut | 44 | +9 |
| TTCCGGAA-p-Qut-p-Qut | 48 | +13 |
| TTCCGGAA-p-Pht | 41 | +6 |
| TTCCGGAA-p-Act-p-Pht | 43 | +8 |
| TTCCGGAA-p-Nct | 46 | +11 |
| TTCCGGAA-p-Qgt | 50 | +15 |
| TTCCGGAA-p-Act-p-Qut-p-Nct | 60 | +25 |
| CCAATTGG | 37 | -- |
| CCAATTGG- p-Agt (1 d) | 40 | +3 |
| CCAATTGG -p-Act-p-Qut-p-Qut | 39 | +2 |
| CCAATTGG- p-Qut-p-Qut | 39 | +2 |

As it is derived from the different assays, the presence of the polymer on the 3'-end of the oligonucleotide increases the melting temperature up to 25 degrees of the duplex indicating an interaction of the fluorophore with the duplex structure of DNA. Said increase in the melting temperature indicates an increase in the stabilization of the oligonucleotide to which the polymer of the invention is attached.

## Claims

1. A polymer composed by monomers of formula (I) 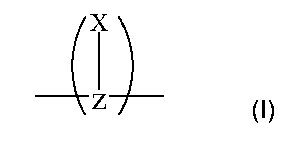 wherein:
X is a radical of formula (II) 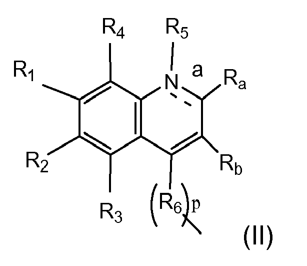
wherein
- R₅ is an electron pair or a (C₁-C₃)-alkyl radical;
- Rₐ and -R_{b} are radicals independently selected from the group consisting of H, (C₁-C₄)-alkyl, (C₁-C₄)-alkoxy, (C₁-C₄)-alkylamino, phenyl, F, Cl, Br, amino, hydroxy, and nitro or
- Rₐ and -R_{b} are fused forming with the carbon atoms to which they are attached a ring of formula (III) 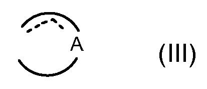
with the condition that
(i) when -R₅ is an electron pair, a is a N=C double bond, and Rₐ and R_{b} are fused forming the ring 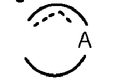 said ring being a biradical selected from (IIIa) and (IIIb) 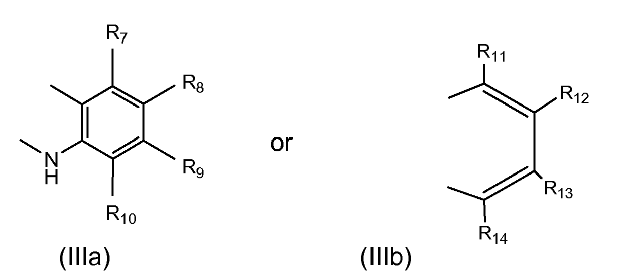 thus, radical (II) is (IIa) or (IIb) respectively 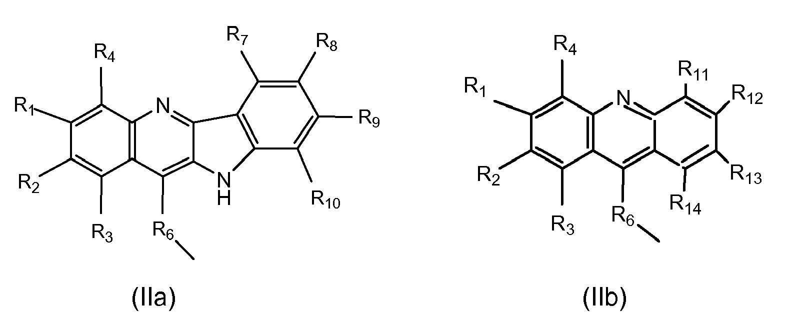
(ii) when -R₅ is a (C₁-C₃)-alkyl radical, a is a N-C single bond and Rₐ and R_{b} are fused forming the ring 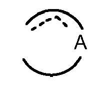 said ring being a biradical 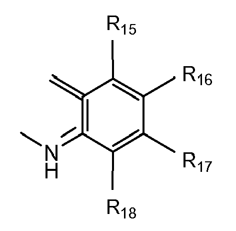 thus, the radical (II) is (IIc); 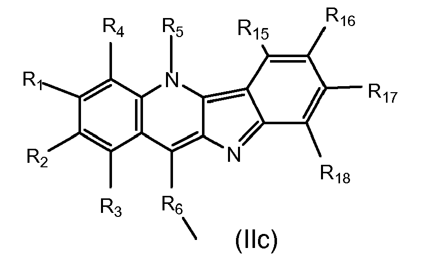 R₁-R₄ and R₇-R₁₈ represent radicals, same or different, selected from the group consisting of H, (C₁-C₄)-alkyl, (C₁-C₄)-alkoxy, (C₁-C₄)-alkylamino, phenyl, F, Cl, Br, amino, hydroxy, and nitro; p is an integer from 0 to 1;
R₆ is a biradical selected from the group consisting of -CO-;
-CONH(CH₂)ₘCO-; and -CO[NHCHR"CO]ₘ-, wherein -R" are side chains radicals, same or different, corresponding to natural aminoacids; and m is an integer from 1 to 3;
Z is a triradical of formula (IV) 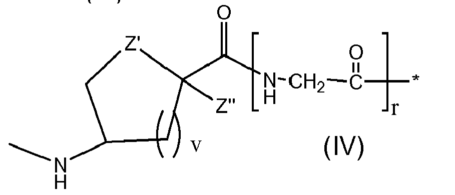
wherein
r is an integer from 0 to 1;
v is an integer from 0 to 1;
Z' is a triradical selected from -CH₂- and nitrogen;
Z" is H or a -NH- biradical,
with the proviso that:
(a) when Z' is nitrogen, forming an amide bound with R₆, then Z" is hydrogen and v is an integer from 0 to 1, and
or of formula (V): 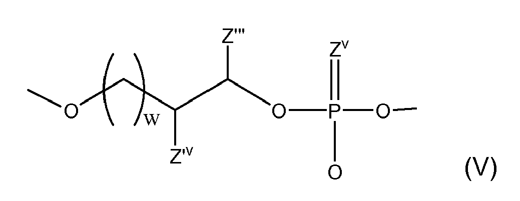 wherein
Z'" is selected from -CH₃ and -CH₂NH-,
Z^{iv} is selected from H and NH,
Z^{v} is selected from S and O atom,
W is an integer from 0 to 1,
with the proviso that
(c) when R₆ is bound to Z"', then Z'" is -CH₂NH-, Z^{iv} is hydrogen and w is 0; and
(d) when Z^{iv} is -NH- forming an amide bound with R₆, Z'" is -CH₃ and w is 1; and
and wherein the monomers of formula (I) are linked through the triradical Z, forming an amide or phosphate bound.

2. The polymer according to claim 1 wherein the triradical Z group corresponds to the formula (IV).

3. The polymer according to claim 1 wherein the triradical Z group corresponds to the formula (V).

4. The polymer according to any of the claims 1-2 wherein the triradical Z of formula (IV) is selected from the group consisting of: 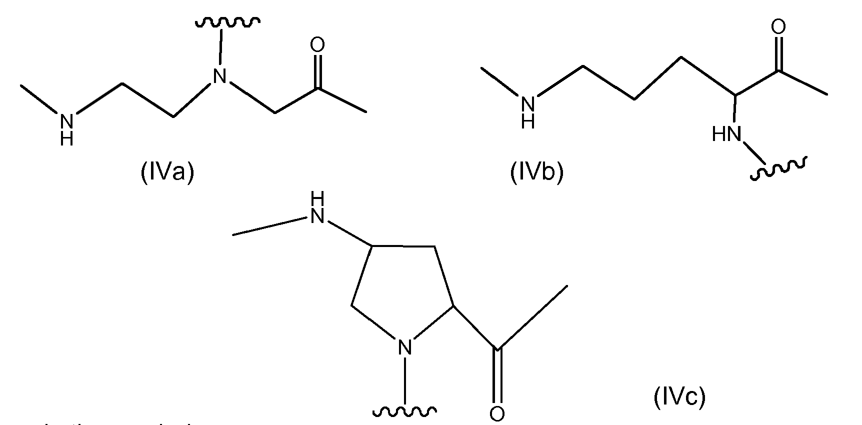 wherein the symbol 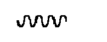 indicates the position through which triradical Z is attached to the radical X.

5. The polymer according to any of the claims 1 and 3 wherein the triradical Z of formula (V) is selected from the group consisting of: 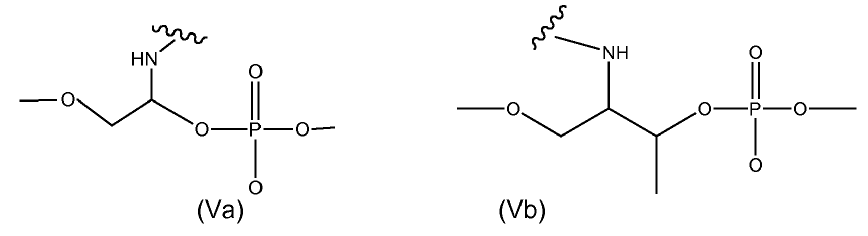 wherein the symbol 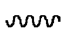 indicates the position through which radical Z is attached to radical X.

6. The polymer according to any of the preceding claims wherein the radical X of formula (II) is selected from the group consisting of: 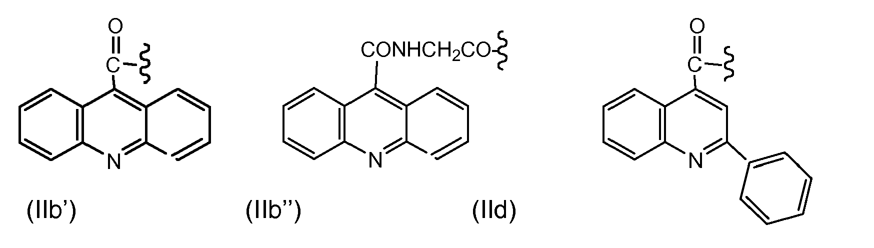 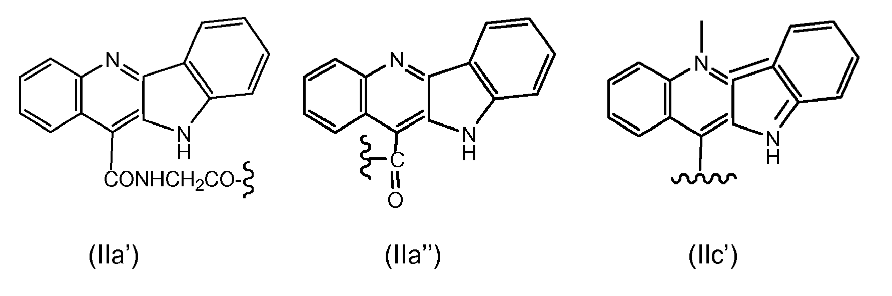 wherein the symbol 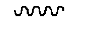 indicates the position through which radical X is attached by its radical R₆ to the triradical Z.

7. The polymer as defined in claim 1 wherein R₆ is -CO-.

8. The polymer as defined in claim 1 wherein R₆ is -CONH-.

9. The polymer as defined in claim 1 wherein R₆ is -CO[NHCHR"CO]ₘ-, being -R" the side chain radical corresponding to the aminoacid selected from glicine and proline; and m is an integer from 1 to 3.

10. The polymer according to any of the preceding claims which is composed from two to ten monomers of formula (I).

11. The polymer according to any of the preceding claims which is a homopolimer.

12. The polymer according to any of the preceding claims which is a heteropolymer.

13. The polymer according to any of the preceding claims which is selected from the group consisting of:
O-{2-N-(Acridine-9-carbamoyl)-(1-hydroxybut-3-yl)} and O-{2-N-(10H-indolo[3,2-d]quinoline-11-carbamoyl)-3-hydroxybut-1-yl}phosphate;
O-{2-N-(10H-indolo[3,2-d]quinoline-11-carbamoyl)-(1-hydroxybut-3-yl)}and O-(2-N-{10H-indolo[3,2-d]quinoline-11-carbamoyl}-3-hydroxybut-1-yl) phosphate;
O-{2-N-(Acridine-9-carbamoyl)-(1-hydroxybut-3-yl)}phosphate(3-1)O-{2-N-(10H-indolo[3,2-d]quinoline-11-carbamoyl)-3-oxybut-1-yl}phosphate(3-1)O-(2-N-{10H-indolo[3,2-d]quinoline-11-carbamoyl}-3-hydroxybut-1-yl);
O-{2-N-(Acridine-9-carbamoyl)-(1-hydroxybut-3-yl)}phosphate(3-1)O-{2-N-(acridine-9-carbamoyl)-(1-hydroxybut-3-yl)}phosphate(3-1)O-{2-N-(acridine-9-carbamoyl)-(1-hydroxybut-3-yl)}phosphate(3-1)O-{2-N-(acridine-9-carbamoyl)-(1-hydroxybut-3-yl)}phosphate(3-1)O-{2-N-(acridine-9-carbamoyl)-(1-hydroxybut-3-yl)}phosphate(3-1)O-{2-N-(acridine-9-carbamoyl)-3-hydroxybut-1-yl};
O-{2-N-(Acridine-9-carbamoyl)-(1-hydroxybut-3-yl)} and O-{3-(5-methyl-5*H-*indolo[3,2*b*]quinolin-11-ylamino-(S)-(2-hydroxyprop-3-yl}phosphate;
O-{2-N-(Acridine-9-carbamoyl)-(1-hydroxybut-3-yl)} and O-{3-(5-methyl-5*H-*indolo[3,2*b*]quinolin-11-ylamino-(S)-(2-hydroxyprop-3-yl}phosphorotioate;
O-[(R)-3-(Acridin-9-ylamino)-1-hydroxy-propane-2-yl]- phosphate (2-1) O-{2-N-(acridine-9-ylamino)-2-oxyprop-1-yl}phosphate(2-4)4-hydroxybutiramide;
O-{2-N-(2-phenylquinoline-4-carbamoyl-1-hydroxybutan-3-yl)} and O-{2-N-(acridine-9-carbamoyl)-3-hydroxybut-1-yl}phosphate;
O-{2-N-(2-phenylquinoline-4-carbamoyl-1-hydroxybutan-3-yl)} and O-{2-N-(2-phenylquinoline-4-carbamoyl-3-hydroxybutan-1-yl)}phosphate;
O-{2-N-(acridine-9-carbamoyl)-1-hydroxybut-3-yl} and O-{2-N-(2-phenylquinoline-4-carbamoyl-3-hydroxybutan-1-yl)} phosphate; O-{2-N-(2-phenylquinoline-4-carbamoyl-1-hydroxybutan-3-yl)} and O-(2-N-{10H-indolo[3,2-d]quinoline-11-carbamoyl}-3-hydroxybut-1-yl);
O-{2-N-(Acridine-9-carbamoyl)-(1-hydroxybut-3-yl)} phosphate (3-1) O-{2-N-(10H-indolo[3,2-d]quinoline-11-carbamoyl)-3-oxybut-1-yl}phosphate(3-1)O-{2-N-(acridine-9-carboxamido)acetamido]-(3-hydroxybut-1-yl)};
(2S, 3R)-2-((9H-Fluoren-9-yl)methyloxycarbonyl)amino)butane-1-(4,4'-dimethoxytrityloxy)butan-3-ol;
(2S, 3R)-2-((9H-Fluoren-9-yl)methyloxycarbonyl)amino)butane-1-(4,4'-dimethoxytrityloxy)butan-3-yl N,N-diisopropylamino-2-cyanoethyl phosphoramidite;
O-{2-N-(10H-indolo[3,2-d]quinoline-11-carbamoyl)-3-oxybut-1-yl}phosphate (3-1)O-{3-(5-methyl-5*H*-indolo[3,2-*b*]quinolin-11-ylamino-(S)-(2hydroxylprop-3-yl);
O-{2-N-(10H-indolo[3,2-d]quinoline-11-carbamoyl)-3-oxybut-1-yl}phosphate (3-1) O-{2-N-(10H-indolo[3,2-*d*]quinoline-11-carbamoyl)-3-oxybut-1-yl} phosphate (3-1) O-(2-N-{10H-indolo[3,2-*d*]quinoline-11-carbamoyl}-3-hydroxybut-1-yl);
O-{2-N-(Acridine-9-carbamoyl)-(1-hydroxybut-3-yl)} phosphate (3-1) O-{2-N-(acridine-9-carbamoyl)-(1-hydroxybut-3-yl)} phosphate (3-1) O-{2-N-(acridine-9-carbamoyl)-(3-hydroxybut-1-yl)};
O-{2-N-(Acridine-9-carbamoyl)-(1-hydroxybut-3-yl)}phosphate(3-1)O-{2-N-(10H-indolo[3,2-d]quinoline-11-carbamoyl)-3-oxybut-1-yl}phosphate(3-1)O-{2-N-(acridine-9-carbamoyl)-(3-hydroxybut-1-yl)};
O-{2-N-(Acridine-9-carbamoyl)-(1-hydroxybut-3-yl)}phosphate(3-1)O-{2-N-(10*H*-indolo[3,2-*d*]quinoline-11-carbamoyl)-3-oxybut-1-yl} phosphate (3-1) O-{2-N-(5*H*-indolo[2,3-*b*]quinolin-5-yl)acetamido-3-hydroxybut-1-yl);
Acetyl-{2-[Acridine-9-carbonyl)-amino]-acetyl}-(2-aminoethyl)-glycyl-{2-[Acridine-9-carbonyl)-amino]-acetyl}-(2-aminoethyl)-N-6-hydroxyhexyl glycynamide;
Acetyl-{2-[Acridine-9-carbonyl)-amino]-acetyl}-(2-aminoethyl)-glycyl--{2-[Acridine-9-carbonyl)-amino]-acetyl}-(2-aminoethyl)-glycyl {2-[Acridine-9-carbonyl)-amino]-acetyl}-(2-aminoethyl)-N-6-hydroxyhexyl glycynamide;
Acetyl-{2-N-(10*H*-indolo[3,2-*d*]quinoline-11-carbonyl)-amino]-acetyl}-(2-aminoethyl)-glycyl-{2-N-(10*H*-indolo[3,2-*d*]quinoline-11-carbonyl)-amino]-acetyl}-(2-aminoethyl)- N-6-hydroxyhexyl glycynamide;
N-[2-(Acridine-9-carboxamide)]-4-N-[2-(acridine-9-carboxamide) prolinamide;
N-[2-(Acridine-9-carboxamide)acetyl]-4-N-acetamidoprolinamide;
N-{2-(10H-indolo[3,2-b]quinoline-11-carboxamide)acetyl}-4-N-acetamidoprolinamide;
N⁴-Acetyl-4-amino-{2-(acridine-9-carboxamide)acetyl}prolinyl-4-amino-{2-(acridine-9-carboxamide)acetyl}prolinamide;
N⁴-Acetyl-4-amino-{2-(10H-indolo[3,2-b]quinoline-11-carboxamide)acetyl}prolinyl-4-amino-{2-(10H-indolo[3,2-b]quinoline-11-carboxamide)acetyl}prolinamide;
10H-Indolo[3,2-b]quinoline-11-carboxylic acid {2-[4-acetylamino-2-(1-{2-[(acridine-9-carbonyl)-amino]-acetyl}-5-carbamoyl-pyrrolidin-3-ylcarbamoyl)-pyrrolidin-1-yl]-2-oxo-ethyl}-amide;
10H-Indolo[3,2-b]quinoline-11-carboxylic acid (2-{4-[(4-acetylamino-1-{2-[(acridine-9-carbonyl)-amino]-acetyl}-pyrrolidine-2-carbonyl)-amino]-2-carbamoyl-pyrrolidin-1-yl}-2-oxo-ethyl)-amide;
N⁴-Acetyl-4-amino-{2-(acridine-9-carboxamide)acetyl}prolinyl-4-amino-{2-(acridine-9-carboxamide)acetyl}prolinyl-4-amino-{2-(acridine-9-carboxamide)acetyl}prolinamide;
N⁴-Acetyl-4-amino-{2-(10H-indolo[3,2-b]quinoline-11-carboxamide)acetyl}prolinyl-4-amino-{2-(10H-indolo[3,2-b]quinoline-11-carboxamide)acetyl}prolinyl-{2-(10H-indolo[3,2-b]quinoline-11-carboxamide)acetyl}prolinamide;
N⁴-Acetyl-4-amino-{2-(acridine-9-carboxamide)acetyl}prolinyl-4-amino-{2-(10H-indolo[3,2-b]quinoline-11-carboxamide)acetyl}proliny-4-amino-{2-(acridine-9-carboxamide)acetyl}prolinamide;
N⁴-Acetyl-4-amino-{2-(10H-indolo[3,2-b]quinoline-11-carboxamide)acetyl}prolinyl-4-amino-{2-(10H-indolo[3,2-b]quinoline-11-carboxamide)acetyl}prolinyl-4-amino-{2-(acridine-9-carboxamide)acetyl}prolinamide;
N⁴-Acetyl-4-amino-{2-(10H-indolo[3,2-b]quinoline-11-carboxamide)acetyl}prolinyl-4-amino-{2-(acridine-9-carboxamide)acetyl}prolinyl-4-amino-{2-(acridine-9-carboxamide)acetyl}prolinamide;
N⁴-Acetyl-4-amino-{2-(10H-indolo[3,2-b]quinoline-11-carboxamide)acetyl}prolinyl-4-amino-{2-(acridine-9-carboxamide)acetyl}prolinyl-4-amino-{2-(10H-indolo[3,2-b]quinoline-11-carboxamide)acetyl}prolinamide;
N⁴-Acetyl-4-amino-{2-(acridine-9-carboxamide)acetyl}prolinyl-4-amino-{2-(acridine-9-carboxamide)acetyl}prolinyl-4-amino-{2-(10H-indolo[3,2-b]quinoline-11-carboxamide)acetyl}prolinamide;
N⁴-Acetyl-4-amino-{2-(acridine-9-carboxamide)acetyl}prolinyl-4-amino-{2-(10H-indolo[3,2-b]quinoline-11-carboxamide)acetyl}proliny-4-amino-{2-(10H-indolo[3,2-b]quinoline-11-carboxamide)acetyl}prolinamide;
N⁴-Acetyl-4-amino-{2-(10H-indolo[3,2-b]quinoline-11-carboxamide)acetyl}prolinyl-4-aminoprolinyl-4-amino-{2-(acridine-9-carboxamide)acetyl}prolinyl-4-aminoprolinyl-4-amino-[(2-phenyl-quinoline-4-carboxamide)acetyl]prolinamide;
N⁴-Acetyl-4-amino-{2-(acridine-9-carboxamide)acetyl}prolinyl-4-aminoprolinyl-4-amino-[(2-phenyl-quinoline-4-carboxamide)acetyl]prolinamide-4-aminoprolinyl-4-amino-{2-(10H-indolo[3,2-b]quinoline-11-carboxamide)acetyl}prolinamide;
N⁴-Acetyl-4-amino-{2-(10H-indolo[3,2-b]quinoline-11-carboxamide)acetyl}prolinyl-4-aminoprolinyl-4-aminoprolinyl-4-amino-{2-(acridine-9-carboxamide)acetyl}prolinyl-4-aminoprolinyl-4-aminoprolinyl-4-amino-[(2-phenyl-quinoline-4-carboxamide)acetyl]prolinamide;
N⁴-Acetyl-4-amino-{2-(acridine-9-carboxamide)acetyl}prolinyl-4-aminoprolinyl-4-aminoprolinyl-4-amino-[(2-phenyl-quinoline-4-carboxamide)acetyl]prolinamide-4-aminoprolinyl-4-aminoprolinyl-4-amino-{2-(10H-indolo[3,2-b]quinoline-11-carboxamide)acetyl}prolinamide;
N⁴-Acetyl-5-N-{2-(acridine-9-carboxamide)acetyl}ornithinyl-5-N-{2-(acridine-9-carboxamide)acetyl}ornithinyl-5-N-{2-(acridine-9-carboxamide)acetyl}ornithinamide;
N⁴-Acetyl-5-N-{2-(acridine-9-carboxamide)acetyl}ornithinyl-5-N-{2-(10H-indolo[3,2-b]quinoline-11-carboxamide)acetyl}ornithinyl-5-N-{2-(acridine-9-carboxamide)acetyl}ornithinamide;
N⁴-Acetyl-5-N-{2-(acridine-9-carboxamide)acetyl}ornithinyl-5-N-{2-(10H-indolo[3,2-b]quinoline-11-carboxamide)acetyl}ornithinyl-5-N-{2-(10H-indolo[3,2-b]quinoline-11-carboxamide)acetyl}ornithinamide; and
N⁴-Acetyl-5-N-{2-(10H-indolo[3,2-b]quinoline-11-carboxamide)acetyl}ornithinyl-5-N-{2-(10H-indolo[3,2-b]quinoline-11-carboxamide)acetyl}ornithinyl-5-N-{2-(10H-indolo[3,2-b]quinoline-11-carboxamide)acetyl}ornithinamide.

14. A process for preparing a polymer as defined in any of the preceding claims 1-13 **characterized in that** it is carried out coupling compounds of formula (VI): 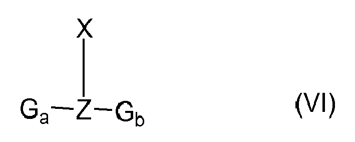 wherein
X and Z are as defined in any one of the preceding claims, and
Gₐ and G_{b} are protecting groups,
on a solid-phase support.

15. The process as defined in claim 14 wherein Gₐ and G_{b} are selected from dimethoxytrityl, -P(OCH₂CH₂CN)-N(isopropyl)₂ and t-butoxy carbonyl protecting groups.

16. A compound of formula (VI): 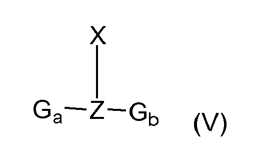 wherein X, Z, Gₐ and G_{b} are as defined in any of the claims 14-15.

17. A compound according to claim 16 which is linked to a solid support through one of the protecting groups Gₐ and G_{b}.

18. Use of a polymer as defined in any of the claims 1-13 as a fluorophore.

19. A method of preparing a fluorescently labeled nucleic acid molecule which comprises incorporating at least one polymer according to any of the claims 1-13 into a RNA or DNA molecule under conditions sufficient to incorporate said polymer.

20. A method of detecting a target nucleic acid in a sample to be tested which comprises contacting the target nucleic acid with a nucleic acid probe comprising at least one polymer according to any of the claims 1-13 for a time under conditions sufficient to permit hybridization between said target and said probe; and detecting said hybridization.

21. Use of a polymer as defined in any of the claims 1-13 in a DNA analysis procedure.

22. Use of a polymer as defined in any of the claims 1-13 in a fluorescence resonance energy transfer procedure.
